# EUROPEAN PATENT APPLICATION

(11) **EP 4 794 394 A1**
(43) Date of publication of application: **19.08.2026**
(21) Application number: 24881555.7
(22) Date of filing: 21.10.2024
(51) Int. Cl.: H04W 36/18

(54) **WIRELESS LOCAL AREA NETWORK SYSTEM AND METHOD, AND COMMUNICATION APPARATUS**

(30) Priority: 27.10.2023 CN 202311407862
(71) Applicant: HUAWEI TECHNOLOGIES CO., LTD., Shenzhen, Guangdong 518129 (CN)
(72) Inventor: YU, Yue, Shenzhen, Guangdong 518129 (CN); ZHANG, Hao, Shenzhen, Guangdong 518129 (CN); HE, Yuan, Shenzhen, Guangdong 518129 (CN); BAI, Xiaofei, Shenzhen, Guangdong 518129 (CN); BAO, Dewei, Shenzhen, Guangdong 518129 (CN)
(74) Representative: Maiwald GmbH
(86) International application number: PCT/CN2024/126109
(87) International publication number: WO 2025/087190

(57) **Abstract**

This application discloses a wireless local area network system, a method, and a communication apparatus. The system includes a plurality of access points. Beacon frames sent by the plurality of access points carry a same BSSID, and all the beacon frames are sent by using a high modulation order. For example, the plurality of access points include a first access point and a second access point. The first access point is configured to send a first beacon frame, where the first beacon frame is modulated by using a first modulation order, and the first beacon frame includes a first BSSID. The second access point is configured to send a second beacon frame, where the second beacon frame is modulated by using a second modulation order, and the second beacon frame includes the first BSSID. Both the first modulation order and the second modulation order are higher than or equal to a modulation order threshold. In this way, if signal strength of a beacon frame sent by an access point is weak, a terminal cannot receive the beacon frame from the access point, and a roaming process is not triggered due to weak signal strength of a received beacon frame, so that a service transmission delay is reduced.

## Description

### CROSS-REFERENCE TO RELATED APPLICATIONS

This application claims priority to Chinese Patent Application No. 202311407862.1, filed with the China National Intellectual Property Administration on October 27, 2023 and entitled "WIRELESS LOCAL AREA NETWORK SYSTEM, METHOD, AND COMMUNICATION APPARATUS", which is incorporated herein by reference in its entirety.

### TECHNICAL FIELD

This application relates to the field of wireless local area network (wireless local area network, WLAN) technologies, and in particular, to a wireless local area network system, a method, and a communication apparatus.

### BACKGROUND

A WLAN system includes at least one access point (access point, AP) and at least one terminal. As the terminal moves, the terminal may move from a coverage area of one AP to a coverage area of another AP. To ensure service continuity and communication quality of the terminal, the terminal needs to roam, to be specific, the terminal needs to switch between different APs.

However, frequent switching of the terminal between a plurality of APs may lead to a large service transmission delay, and may even cause packet loss, severely affecting services.

### SUMMARY

This application provides a WLAN system, a method, and a communication apparatus, to reduce a number of times a terminal triggers roaming, so as to reduce a service transmission delay.

According to a first aspect, this application provides a WLAN system. The WLAN system includes a plurality of access points, and the plurality of access points include a first access point and a second access point. The first access point is configured to send a first beacon frame, where the first beacon frame includes a first basic service set (basic service set, BSS) identifier (identifier, ID). The second access point is configured to send a second beacon frame, where the second beacon frame includes the first BSSID. The first beacon frame is modulated by using a first modulation order, and the second beacon frame is modulated by using a second modulation order. Both the first modulation order and the second modulation order are higher than or equal to a modulation order threshold.

In this solution, the modulation order threshold may be (pre-)configured. If both the first modulation order and the second modulation order are higher than or equal to the modulation order threshold, it may be considered that both the first access point and the second access point use a high modulation order to modulate the sent beacon frames. A higher modulation order indicates higher signal strength required by a receiving end to normally demodulate a received signal. In this way, when signal strength of a beacon frame sent by an access point is weak, the receiving end (for example, a terminal) cannot demodulate the beacon frame sent by the access point or cannot receive a beacon frame with weak signal strength. Through this solution, a beacon frame with weak signal strength may be filtered out for the terminal. For the terminal, signal strength of all received beacon frames is strong. This can reduce triggering of a roaming process by the terminal, reduce a service transmission delay, and reduce a packet loss.

In an implementation, the modulation order threshold is determined based on a signal strength threshold.

The modulation order threshold is determined based on the signal strength threshold, so that a beacon frame with which signal strength is to be filtered out can be clearly determined, so that an appropriate quantity of beacon frames can be filtered out by using a modulation order used by the access point, to ensure network coverage as much as possible while reducing triggering roaming by the terminal.

In an implementation, the modulation order threshold is higher than or equal to a modulation order corresponding to the signal strength threshold, and the modulation order corresponding to the signal strength threshold is: When the corresponding modulation order is used to modulate a signal, if signal strength of a signal received by a receiving end is greater than or equal to the signal strength threshold, the receiving end may demodulate the received signal.

In an implementation, the signal strength threshold is determined based on signal strength corresponding to triggering roaming by the terminal. The signal strength corresponding to triggering roaming by the terminal is such that, when signal strength is less than (or less than or equal to) this value, the terminal disconnects an association with a currently associated AP and attempts to associate with another AP.

The signal strength threshold is determined based on the signal strength corresponding to triggering roaming by the terminal, so that an appropriate modulation order threshold can be more accurately determined, to ensure network coverage as much as possible while reducing triggering roaming by the terminal.

In an implementation, the signal strength corresponding to triggering roaming by the terminal is further determined based on an operating channel bandwidth of the terminal. The signal strength threshold is adaptively adjusted based on the operating channel bandwidth of the terminal, to obtain a more appropriate modulation order threshold as much as possible.

In an implementation, both the first modulation order and the second modulation order are higher than or equal to 64-quadrature amplitude modulation (quadrature amplitude modulation, QAM).

In an implementation, when first duration is greater than preset duration, the second access point sends the second beacon frame. The first duration is a time interval between a first moment and a second moment, the first moment is a moment at which the second access point latest receives a beacon frame carrying the first BSSID, and the second moment is a moment at which the second access point last sends a beacon frame carrying the first BSSID, or the second moment is a moment at which the second access point last receives a trigger for causing the second access point to send a beacon frame carrying the first BSSID.

In this solution, an interval between two consecutive beacon frames sent by the second access point is greater than the preset duration. In this way, the second access point can be prevented from sending beacon frames a plurality of times within one beacon transmission period, that is, from sending the beacon frames in an infinite loop.

In an implementation, if the second access point has not sent a beacon frame, when receiving a beacon frame from another access point, the second access point sends the second beacon frame.

In an implementation, signal strength of the latest received beacon frame carrying the first BSSID is less than a preset threshold.

In this solution, only when signal strength of the received beacon frame is less than the preset threshold, the second access point sends the second beacon frame. In this way, it can be ensured that a small quantity of access points send beacon frames, and a possibility of triggering the roaming process by the terminal can be further reduced.

In an implementation, the preset duration is less than a beacon transmission period, and the preset duration is greater than total duration in which at least one access point in the WLAN system occupies a channel to send a beacon frame. In this way, a secondary access point may send a beacon frame once within one beacon transmission period as much as possible.

In an implementation, the first beacon frame and the second beacon frame carry a same timestamp.

In this solution, the first beacon frame may be a beacon frame sent by a primary access point, and the second beacon frame is a beacon frame sent by a secondary access point. The first beacon frame and the second beacon frame carry the same timestamp. This helps reduce a packet loss on the terminal, and further reduce processing complexity of the secondary access point.

According to a second aspect, this application provides another WLAN system. The WLAN system includes a plurality of access points and a terminal device, and the plurality of access points include a first access point and a second access point. The first access point is configured to send a first beacon frame at first time, where the first beacon frame includes a first BSSID. The second access point is configured to send a second beacon frame at second time, where the second beacon frame includes the first BSSID. The first time is the same as the second time, or a time interval between the first time and the second time is less than a preset interval. The terminal is configured to receive a third beacon frame, where the third beacon frame is obtained based on the first beacon frame and the second beacon frame.

In this solution, access points send beacon frames at the same time or close time, so that the terminal can superimpose beacon frames from different access points, to obtain a beacon frame with higher signal strength. In this way, triggering of a roaming process by the terminal can be reduced.

In an implementation, that the third beacon frame is obtained based on the first beacon frame and the second beacon frame includes: A signal carrying the third beacon frame is a superposition of a signal carrying the first beacon frame and a signal carrying the second beacon frame.

In an implementation, included content, a used scrambling code, and a used modulation and coding scheme (modulation and coding scheme, MCS) of the second beacon frame are the same as those of the first beacon frame. In this way, the first beacon frame and the second beacon frame implement a multipath effect, so that signal strength of the third beacon frame obtained by the terminal is greater.

In an implementation, the first access point is further configured to receive a timing synchronization frame from a third access point, where the timing synchronization frame is used to trigger the access point that receives the timing synchronization frame to send the first beacon frame.

In this solution, sending of a beacon frame by each access point is triggered by the timing synchronization frame, and after receiving the timing synchronization frame, each access point sends the beacon frame. Through this solution, access points may send beacon frames at the same time or close time, to implement the multipath effect.

In an implementation, the timing synchronization frame includes a timestamp, and the timestamp indicates the access point that receives the timing synchronization frame to add the timestamp to a to-be-sent beacon frame. In this way, the beacon frames sent by the access points may include same content, to implement the multipath effect.

In an implementation, both the first time and the second time are preset beacon transmission time, and different access points have same preset beacon transmission time. In this solution, each access point sends a beacon frame when the preset beacon transmission time is reached, to ensure that each access point sends the beacon frame at the same time.

In an implementation, an interval between the first time and the second time is less than a preset interval. The first time and the second time may be close time.

In an implementation, the preset interval is less than or equal to a guard interval (guard interval, GI), and time synchronization precision between the first access point and the second access point is higher than the GI.

In this solution, when the time synchronization precision between the first access point and the second access point is higher than the GI, it can be further ensured that the first time is the same as or close to the second time. Access points may be synchronized in advance, and a timestamp carried in a beacon frame sent by each access point may be system time obtained from a system clock of each access point, and complexity is low.

According to a third aspect, this application provides a beacon frame sending method. The method is performed by a first communication apparatus. The first communication apparatus may be an access point, or the first communication apparatus is a component configured to implement a function of the access point. For example, the first communication apparatus is a unit/module, a circuit, a chip, or the like in the access point. The following describes the method provided in the third aspect by using an example in which the first communication apparatus is the access point. Certainly, the method provided in the third aspect may alternatively be implemented by the unit/module, the circuit, the chip, or the like in the access point. In addition, the access point is the access point in the WLAN system in the first aspect. For beneficial effects, refer to the descriptions of the first aspect. Details are not described herein again.

The method includes: generating, by the access point, a first beacon frame; and sending the first beacon frame. The first beacon frame includes a first BSSID, and the first beacon frame is modulated by using a first modulation order. The first modulation order is higher than or equal to a modulation order threshold.

In an implementation, the modulation order threshold is determined based on a signal strength threshold.

In an implementation, the signal strength threshold is determined based on signal strength corresponding to triggering roaming by the terminal.

In an implementation, the modulation order threshold is higher than or equal to a modulation order corresponding to the signal strength threshold, and the modulation order corresponding to the signal strength threshold is: When the corresponding modulation order is used to modulate a signal, if signal strength of a signal received by a receiving end is greater than or equal to the signal strength threshold, the receiving end may demodulate the received signal.

In an implementation, when first duration is greater than preset duration, the access point sends the first beacon frame. The first duration is a time interval between a first moment and a second moment, the first moment is a moment at which the access point latest receives a beacon frame carrying the first BSSID, and the second moment is a moment at which the access point last sends a beacon frame carrying the first BSSID, or the second moment is a moment at which the access point last receives a trigger for causing the access point to send a beacon frame carrying the first BSSID.

In an implementation, signal strength of the latest received beacon frame carrying the first BSSID is less than a preset threshold.

In an implementation, the preset duration is less than a beacon transmission period, and the preset duration is greater than total duration in which at least one access point in the WLAN system occupies a channel to send a beacon frame.

According to a fourth aspect, this application provides a beacon frame sending method. The method is performed by a second communication apparatus. The second communication apparatus may be a terminal, or the second communication apparatus is a component configured to implement a function of the terminal. For example, the second communication apparatus is a unit/module, a circuit, a chip, or the like in the terminal. The following describes the method provided in the fourth aspect by using an example in which the second communication apparatus is the terminal. Certainly, the method provided in the fourth aspect may alternatively be implemented by the unit/module, the circuit, the chip, or the like in the terminal. In addition, the terminal is the terminal in the WLAN system in the second aspect. For beneficial effects, refer to the descriptions of the second aspect. Details are not described herein again.

The method includes: receiving, by the terminal, a third beacon frame, where the third beacon frame is obtained based on a first beacon frame and a second beacon frame, the first beacon frame includes a first BSSID, and the second beacon frame includes the first BSSID.

In an implementation, that the third beacon frame is obtained based on the first beacon frame and the second beacon frame includes: A signal carrying the third beacon frame is a superposition of a signal carrying the first beacon frame and a signal carrying the second beacon frame.

In an implementation, included content, a used scrambling code, and a used MCS of the second beacon frame are the same as those of the first beacon frame.

In an implementation, sending of the first beacon frame is triggered by a timing synchronization frame, and sending of the second beacon frame is triggered by the timing synchronization frame.

In an implementation, the timing synchronization frame includes a timestamp, and the timestamp indicates an access point that receives the timing synchronization frame to add the timestamp to a to-be-sent beacon frame.

In an implementation, transmission time of the first beacon frame is first time, transmission time of the second beacon frame is second time, and the first time is the same as the second time.

In an implementation, an interval between the first time and the second time is less than a preset interval.

In an implementation, the preset interval is less than or equal to a GI, and time synchronization precision between a first access point that sends the first beacon frame and a second access point that sends the second beacon frame is higher than the GI.

According to a fifth aspect, this application provides a beacon frame sending method. The method is performed by a third communication apparatus. The third communication apparatus may be an access point, or the third communication apparatus is a component configured to implement a function of the access point. For example, the third communication apparatus is a unit/module, a circuit, a chip, or the like in the access point. The following describes the method provided in the fifth aspect by using an example in which the third communication apparatus is the access point. Certainly, the method provided in the fifth aspect may alternatively be implemented by the unit/module, the circuit, the chip, or the like in the access point. In addition, the access point is the access point in the WLAN system in the second aspect. For beneficial effects, refer to the descriptions of the second aspect. Details are not described herein again.

The method includes: receiving, by the access point, a timing synchronization frame; and sending, by the access point, a first beacon frame in response to receiving the timing synchronization frame, where the first beacon frame includes a first BSSID.

In an implementation, the timing synchronization frame includes a timestamp, and the timestamp indicates the access point that receives the timing synchronization frame to add the timestamp to a to-be-sent beacon frame.

According to a sixth aspect, this application provides a communication apparatus. The communication apparatus has a function of implementing behavior of the first access point, the second access point, or the terminal device mentioned in the first aspect or the second aspect. For beneficial effects, refer to related descriptions of the first aspect or the second aspect. Details are not described herein again. The function may be implemented by hardware, or may be implemented by hardware executing corresponding software. The hardware or the software includes one or more units corresponding to the foregoing function.

In a possible design, the communication apparatus includes a corresponding means (means) or module configured to perform the method in any one of the third aspect to the fifth aspect. For example, the communication apparatus includes a processing unit and/or a transceiver unit. These units (modules) may perform corresponding functions of the first access point, the second access point, or the terminal device in the method example in the third aspect, the fourth aspect, or the fifth aspect. For details, refer to the detailed descriptions in the method example. Details are not described herein again. For example, the communication apparatus may be the first access point, the second access point, or the terminal device in the first aspect or the second aspect. For another example, the communication apparatus may be an apparatus that supports the access point or the terminal device in implementing a function required by the WLAN system provided in the first aspect or the second aspect. For example, the communication apparatus may be a chip or a chip system in the access point or the terminal device. The processing unit is also referred to as a processing module or a processor, and the transceiver unit is also referred to as a transceiver module or a transceiver. The processing unit may be configured to generate a beacon frame. The transceiver unit can implement a sending function and a receiving function (for example, configured to send a beacon frame or receive a beacon frame). When the transceiver unit implements the sending function, the transceiver unit may be referred to as a sending unit (sometimes referred to as a sending module). When the transceiver unit implements the receiving function, the transceiver unit may be referred to as a receiving unit (sometimes referred to as a receiving module). The sending unit and the receiving unit may be a same functional unit, the functional unit is referred to as a transceiver unit, and the functional unit can implement the sending function and the receiving function. Alternatively, the sending unit and the receiving unit may be different functional units, and the transceiver unit is a general term for these functional units. These units (modules) may perform corresponding functions in the method example in any one of the third aspect to the fifth aspect. For details, refer to the detailed descriptions in the method example. Details are not described herein again.

According to a seventh aspect, this application provides a communication apparatus. The communication apparatus may be the first access point (or the second access point or the terminal device) in the foregoing embodiments, or a chip or a chip system disposed in the first access point (or the second access point or the terminal device). For beneficial effects, refer to descriptions of the first aspect or the second aspect. Details are not described herein again. The communication apparatus includes a communication interface and a processor. The processor is configured to perform the method performed by the first access point, the second access point, or the terminal device in the foregoing method embodiments. For example, the communication apparatus may be the first access point, the second access point, or the terminal device, or the communication apparatus may be a functional module, for example, a processing chip and a radio frequency chip, in the first access point, the second access point, or the terminal device.

Optionally, the communication apparatus further includes a power supply circuit and a memory. The power supply circuit is configured to supply power to the processor. A specific type of the processor is not limited in this application. For example, the processor may be a central processing unit (central processing unit, CPU), or may be another specific integrated circuit. For another example, the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like.

The memory stores computer program instructions, the processor is coupled to the memory, and the processor may invoke computer-executable instructions stored in the memory, to perform the method performed by the first access point, the second access point, or the terminal device in any one of the third aspect to the fifth aspect and the implementations of the third aspect to the fifth aspect.

According to an eighth aspect, this application provides a communication apparatus. The communication apparatus may be the communication apparatus in the sixth aspect or the seventh aspect in the foregoing embodiments, or a chip or a chip system disposed in the communication apparatus in the sixth aspect or the seventh aspect. The communication apparatus includes a processor and a memory. The memory is configured to store a computer program, instructions, or data. The processor is coupled to the memory. When the processor reads the computer program, the instructions, or the data, the communication apparatus is caused to perform the method performed by the first access point, the second access point, or the terminal device in the foregoing method embodiments.

In an implementation, the memory is located outside the communication apparatus.

In an implementation, the memory is located in the communication apparatus.

In an implementation, the processor and the memory are integrated together.

According to a ninth aspect, this application provides a chip system. The chip system includes a processor, may further include a communication interface, and is configured to implement the method according to any one of the third aspect to the fifth aspect.

In an implementation, the chip system further includes a memory. The memory is configured to store a computer program (which may also be referred to as code or instructions). The processor is configured to invoke the computer program from the memory and run the computer program, so that a device in which the chip system is installed performs the method in any one of the third aspect and the implementations of the third aspect, or the device in which the chip system is installed performs the method in any one of the fourth aspect and the implementations of the fourth aspect, or the device in which the chip system is installed performs the method in any one of the fifth aspect and the implementations of the fifth aspect. The chip system may include a chip, or may include a chip and another discrete device.

According to a tenth aspect, this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the third aspect to the fifth aspect.

During specific implementation, the communication apparatus may be a chip, the input circuit may be an input pin, the output circuit may be an output pin, and the logic circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device like a mobile phone. The interface circuit may be a radio frequency processing chip in the wireless communication device, and the processing circuit may be a baseband processing chip in the wireless communication device. Alternatively, the wireless communication device may be an access point like a router. The interface circuit may be a radio frequency processing chip in the wireless communication device, and the processing circuit may be a processing chip in the wireless communication device.

According to an eleventh aspect, this application provides a computer-readable storage medium. The computer-readable storage medium is configured to store a computer program or instructions. When the computer program or the instructions are run, an access point is caused to perform the method performed by the first access point in any one of the third aspect and the implementations of the third aspect, or a terminal device is caused to perform the method performed by the terminal device in any one of the fourth aspect and the implementations of the fourth aspect, or an access point is caused to perform the method performed by the first access point in any one of the fifth aspect and the implementations of the fifth aspect.

According to a twelfth aspect, this application further provides a computer program product including instructions. When the instructions are run on a computer, the method in any one of the third aspect and the implementations of the third aspect is implemented, or the method in any one of the fourth aspect and the implementations of the fourth aspect is implemented, or the method in any one of the fifth aspect and the implementations of the fifth aspect is implemented.

For beneficial effects of the sixth aspect to the twelfth aspect and the implementations of the sixth aspect to the twelfth aspect, refer to descriptions of beneficial effects of any one of the first aspect to the fifth aspect and the implementations of the first aspect to the fifth aspect.

### BRIEF DESCRIPTION OF DRAWINGS

FIG. 1 is a diagram of an architecture of a WLAN system according to an embodiment of this application;
FIG. 2 is a principle diagram of a BSSID-following solution according to an embodiment of this application;
FIG. 3 is a principle diagram of a same-BSSID solution according to an embodiment of this application;
FIG. 4 is a schematic flowchart of a communication method 400 according to an embodiment of this application;
FIG. 5 is a diagram of filtering beacon frames with weak signal strength in a communication method 400 according to an embodiment of this application;
FIG. 6A and FIG. 6B are principle diagrams of packet loss on a terminal according to an embodiment of this application;
FIG. 7A is a principle diagram of determining, by an access point, whether preset beacon transmission time is reached according to an embodiment of this application;
FIG. 7B is a principle diagram of determining, by an access point, whether to send a beacon at preset beacon transmission time according to an embodiment of this application;
FIG. 8 is a diagram of sending beacon frames to a terminal through different transmission paths by two Aps according to an embodiment of this application;
FIG. 9 is a diagram of a communication method 900 according to an embodiment of this application;
FIG. 10 is a diagram of a structure of a communication apparatus according to an embodiment of this application; and
FIG. 11 is a diagram of another structure of a communication apparatus according to an embodiment of this application.

### DESCRIPTION OF EMBODIMENTS

Embodiments of this application provide a WLAN system. The WLAN system includes a plurality of access points and at least one terminal. The WLAN system can reduce a quantity of times of triggering terminal roaming, to reduce a service transmission delay and reduce an effect on service transmission.

Embodiments of this application are applicable to a WLAN scenario, applicable to an IEEE 802.11 system standard (for example, an 802.11ax standard), or applicable to a next generation of the 802.11ax standard, for example, an 802.11be standard (Wi-Fi 7 or extremely high throughput (extremely high throughput, EHT)), 802.11ad, 802.11ay, and 802.11bf. Embodiments of this application may also be applied to a WLAN system like an internet of things (internet of things, IoT) network or a vehicle to X (Vehicle to X, V2X) network. Certainly, embodiments of this application may be further applicable to other possible communication systems, for example, a long term evolution (long term evolution, LTE) system, a new radio (new radio, NR) system, and a future cellular communication system like a 6^{th} generation mobile communication technology (6^{th} generation mobile communication technology, 6G).

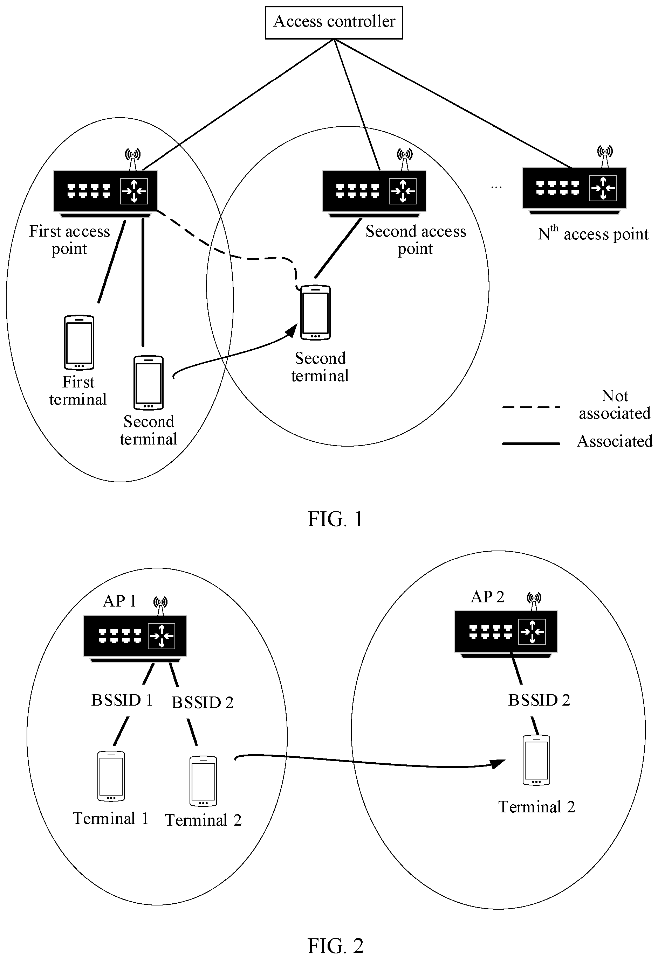

For example, FIG. 1 is a diagram of an architecture of a WLAN system according to an embodiment of this application. In FIG. 1, for example, the WLAN system includes N access points (AP), two terminals, and an access controller (access controller, AC), where N is an integer greater than or equal to 2. The N Aps are a first access point to an N^{th} access point. The two terminals are a first terminal and a second terminal. The AC has control functions such as configuration management, access, and scheduling for each access point. The AC may be an independent device, may be a software program of at least one AP in the N Aps, or may be a software program in a cloud. In FIG. 1, for example, the AC is the independent device. The AC may be connected to the N Aps in a wired or wireless manner. It should be noted that quantities of Aps and terminals in FIG. 1 are merely examples. There may be more or fewer Aps and terminals. Embodiments of this application are also applicable to communication between Aps. For example, the Aps may communicate with each other through a distributed system (distributed system, DS). Through the DS, the AP may communicate with a terminal associated with the AP and/or a terminal not associated with the AP. Embodiments of this application are also applicable to communication between terminals.

The AP is an apparatus that is deployed in a wireless communication network and that provides a wireless communication function for the terminal associated (associated) with the AP. The AP may be an access point for a terminal (for example, a mobile phone) to access a wired (or wireless) network, and is mainly deployed in a home, a building, and a campus. A typical coverage radius of the AP is dozens of meters to hundreds of meters. Certainly, the AP may alternatively be deployed outdoors. The AP is equivalent to a bridge connecting a wired network and a wireless network, and is mainly configured to connect each wireless network client to the wireless network, and then connect the wireless network to an internet.

The AP in embodiments of this application may be an access point applicable to a current or future wireless fidelity (wireless fidelity, Wi-Fi) standard. For example, the AP in embodiments of this application may be an AP applicable to the IEEE 802.11 system standard. For example, the AP may be a device supporting the 802.11be standard, or may be a device that supports a plurality of WLAN standards of an 802.11 family like 802.11ay, 802.11ad, 802.11ax, and a next generation of 802.11be. For example, the AP may be a communication device like a base station, a router, a gateway, a repeater, a communication server, a switch, or a bridge. The base station may include various forms of macro base stations, micro base stations, relay stations, and the like. For another example, the AP may be a terminal device (for example, a mobile phone) or a network device (for example, a router) having a Wi-Fi chip.

The terminal may be a terminal that supports a Wi-Fi standard. For example, the terminal may be a wireless communication chip, a wireless sensor, or a wireless communication terminal, or may be referred to as a user. For example, the terminal may be a station (station, STA) that supports a Wi-Fi communication function, a mobile phone, a tablet computer, a set-top box, a smart television, a smart wearable device, a vehicle-mounted communication device, or a computer. In an implementation, the terminal supports the 802.11be standard; or the terminal supports a plurality of WLAN standards of the 802.11 family like 802.11ay, 802.11ad, 802.11ax, and the next generation of 802.11be. In embodiments of this application, the AP and the terminal may be devices used in the vehicle to X, may be internet of things nodes, sensors, or the like in the IoT, may be smart cameras, smart remote controls, smart water/electricity meters in smart home, or may be sensors in smart city.

As the terminal moves, the terminal may move from a coverage area of one AP to a coverage area of another AP. To ensure service continuity and communication quality of the terminal, terminal roaming is triggered. Triggering terminal roaming means triggering the terminal to disconnect from an associated access point, and triggering the terminal to establish an association with another access point. For ease of understanding, the example in FIG. 1 is still used. The second terminal is used as an example. The second terminal is initially associated with the first access point. As the second terminal moves, the second terminal moves from a coverage area of the first access point to a coverage area of the second access point (as shown by an arrow in FIG. 1). In this case, a roaming process of the second terminal is triggered, to be specific, the second terminal is triggered to dissociate from the first access point and establish an association with the second access point. In FIG. 1, a dashed line indicates that the second terminal is not associated with the first access point, and a solid line indicates that the second terminal is associated with the second access point. Service transmission is interrupted during the roaming process of the terminal. In a possible scenario, a requirement for a service transmission delay is high. If the terminal frequently triggers roaming, a service transmission delay may be excessively large, or even a connection to a network is disconnected, causing a packet loss and severely affecting service transmission.

Therefore, in WLAN intra-frequency networking, to avoid triggering roaming by the terminal, the terminal is expected to consider different Aps as a same AP. In this way, when the terminal moves from a coverage area of one AP to a coverage area of another AP, the terminal considers that the terminal is always in a coverage area of a same AP, and therefore does not trigger the roaming process. The terminal determines existence of an AP based on a beacon (beacon) frame sent by the AP, where the beacon frame includes an ID of a BSS of a wireless network in which the AP is located. The AP sends the beacon frame, and the terminal receives the beacon frame, and obtains the BSSID carried in the beacon frame, to determine the AP indicated by the BSSID. In the WLAN intra-frequency networking, Aps use a same service set identifier (service set identifier, SSID).

In an implementation, a unique BSSID is allocated/configured to each terminal. For a same terminal, beacon frames sent by different Aps to the terminal carry a same BSSID. When the terminal moves from a coverage area of one AP to a coverage area of another AP, a BSSID carried in a beacon frame received by the terminal remains unchanged. Therefore, the terminal considers that the terminal is always in a coverage area of a same AP, and does not trigger a roaming process. This manner may be referred to as a BSSID-following solution.

In the BSSID-following solution, the terminal may broadcast a probe request message to actively scan a surrounding wireless network, where the probe request message may include an identifier of the terminal; and an AP receiving the probe request message may feed back a probe response message to the terminal, where the probe response message carries a BSSID. Initially, for the same terminal, BSSIDs carried in probe response messages sent by different Aps in response to the probe request message of the terminal are different. For example, a BSSID carried in a probe response message sent by an AP 1 in response to a probe request message of a terminal 1 is a BSSID 1, and a BSSID carried in a probe response message sent by an AP 2 in response to the probe request message of the terminal 1 is a BSSID 2. The terminal receives the probe response messages, and may determine that the Aps corresponding to the probe response messages exist. The terminal may select an appropriate AP from the determined Aps to perform link authentication and association. The terminal may select the AP in a plurality of manners, and a specific manner used by the terminal to select the AP is not limited. For example, the terminal may preferentially select an AP with strong signal strength. For another example, the terminal may preferentially select an AP on a 5G channel. After the terminal is successfully associated with the AP, the AP determines, by using a destination address of an association request sent by the terminal, a BSSID corresponding to the terminal. The BSSID is a unique BSSID of the terminal, and the BSSID is no longer used to respond to a probe request of another terminal until the terminal is disassociated.

Considering that the AP selected by the terminal may not be an optimal AP, the AC may alternatively select a better AP for the terminal subsequently. For example, the AC may periodically select, based on signal strength, an optimal AP for the terminal to access. If the AC finds a better new AP for the terminal, the AC may send information about the terminal to the new AP; create, on the new AP, a virtual AP (virtual access point, VAP) that sends a beacon frame having the BSSID corresponding to the terminal, to provide a service for the terminal; and delete the information about the terminal from an original AP, so that the original AP does not respond to the terminal. After selecting the new AP for the terminal, the AC creates, on the new AP, the VAP that sends the beacon frame having the BSSID corresponding to the terminal. Therefore, beacon frames sent by different Aps to the same terminal may each carry the BSSID allocated to the terminal. The terminal considers that the terminal is always in a coverage area of a same AP, and does not trigger the roaming process.

For ease of understanding, FIG. 2 is a principle diagram of a BSSID-following solution. In FIG. 2, for example, a BSSID allocated to a terminal 1 is a BSSID 1, a BSSID allocated to a terminal 2 is a BSSID 2, and the terminal 2 moves from a coverage area of an AP 1 to a coverage area of an AP 2. Initially, the terminal 2 is located in the coverage area of the AP 1, and a beacon frame sent by the AP 1 to the terminal 2 carries the BSSID 2. When the terminal 2 moves to the coverage area of the AP 2, a BSSID carried in a beacon frame sent by the AP 2 to the terminal is the BSSID 2, and the beacon frame received by the terminal 2 from the AP 2 also carries the BSSID 2. From a perspective of the terminal 2, the BSSID included in the beacon frame received by the terminal 2 does not change. Therefore, a roaming process does not need to be triggered.

However, one AP supports access of a plurality of terminals. Correspondingly, in the BSSID-following solution, the AP needs to maintain a BSSID corresponding to each terminal. When there are a large quantity of terminals, the AP needs to maintain a large quantity of BSSIDs, and the AP sends a large quantity of beacon frames. This occupies a large quantity of air interface resources and affects throughput performance of a WLAN network.

In another implementation, beacon frames sent by different Aps carry a same BSSID. In this case, BSSIDs carried in beacon frames received by any terminal from the different Aps always remain unchanged, and therefore a roaming process does not need to be triggered. This manner is also referred to as a BSSID-same solution or a same-BSSID solution.

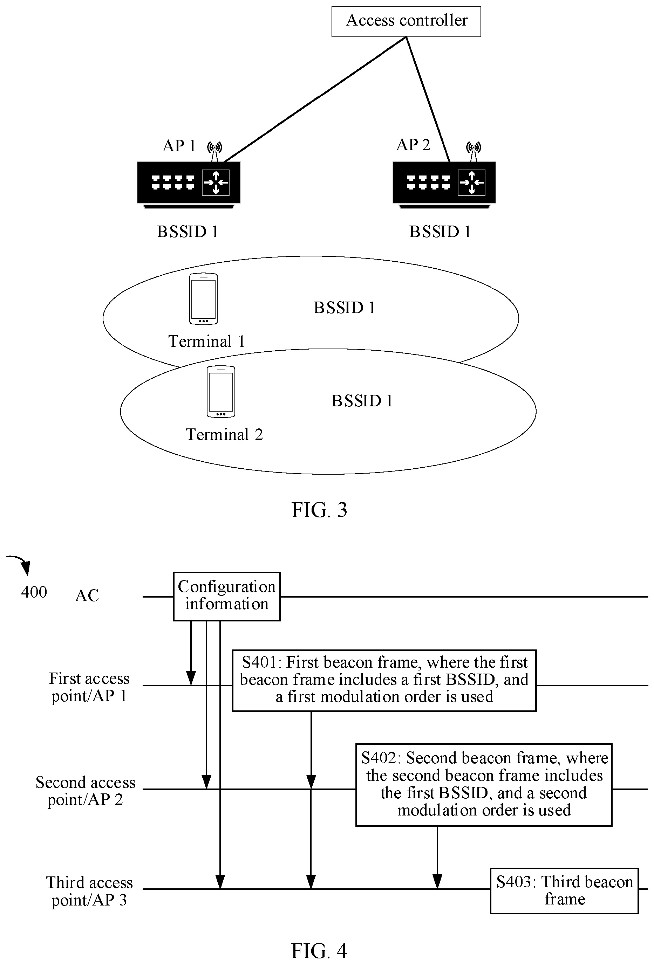

For ease of understanding, FIG. 3 is a principle diagram of a same-BSSID solution. In FIG. 3, for example, beacon frames sent by an AP 1 and an AP 2 each include a BSSID 1. The AP 1 and the AP 2 periodically broadcast a beacon frame. A terminal 1 and a terminal 2 are used as an example. It is assumed that both the terminal 1 and the terminal 2 are initially located in a coverage area of the AP 1. A beacon frame sent by the AP 1 to the terminal 1 carries the BSSID 1. In a process in which the terminal 1 moves to a coverage area of the AP 2, a beacon frame received by the terminal 1 from the AP 2 also carries the BSSID 1. From a perspective of the terminal 1, the BSSID included in the beacon frame received by the terminal 1 does not change. Therefore, a roaming process does not need to be triggered. Similarly, a beacon frame sent by the AP 1 to the terminal 2 carries the BSSID 1. In a process in which the terminal 2 moves to the coverage area of the AP 2, a beacon frame received by the terminal 2 from the AP 2 also carries the BSSID 1. From a perspective of the terminal 2, the BSSID included in the beacon frame received by the terminal 2 does not change. Therefore, a roaming process does not need to be triggered.

In actual deployment, distances between different Aps and a same terminal in a WLAN system may be different, and correspondingly, signal strength of beacon frames received by the terminal from the different Aps is also different. If signal strength of a beacon frame received by the terminal is weak, the terminal considers that a current network is poor, and still triggers a roaming process. As a result, a service transmission delay is excessively large, and even a packet loss is caused, severely affecting service transmission.

To resolve the foregoing technical problem, a communication method in embodiments of this application is provided. According to the communication method provided in embodiments of this application, signal strength of all beacon frames received by a terminal is strong, to reduce triggering of a terminal roaming process, so as to reduce a service transmission delay, and reduce a packet loss.

Embodiments of this application provide a plurality of communication methods. First, a first communication method provided in embodiments of this application is described. In the first communication method, a terminal may filter out a beacon frame with weak signal strength, or the terminal cannot receive the beacon frame with weak signal strength, so that signal strength of all beacon frames received by the terminal is strong, to reduce triggering of a roaming process.

Filtering out the beacon frame may also be understood as that the beacon frame fails to be received, or content included in the beacon frame fails to be demodulated. Demodulation means a process of recovering information from a modulated signal carrying information. After receiving a modulated signal carrying a beacon frame, the terminal needs to demodulate the modulated signal to obtain content included in the beacon frame. The terminal can demodulate the content included in the received beacon frame only when power of a signal received by a terminal receiver meets a specific condition. Minimum signal received power at which the receiver can correctly demodulate the content included in the received signal may also be considered as minimum signal received power at an antenna port required for the receiver to operate normally. The minimum signal received power is minimum signal strength, and also referred to as receiving sensitivity.

The receiving sensitivity of the receiver is related to an MCS of a signal and a bandwidth of the signal. Generally, an MCS with a relatively low order has a relatively low transmission rate and relatively low spectral efficiency, but has good anti-interference performance; and an MCS with a relatively high order has a relatively high transmission rate and relatively high spectral efficiency, but has relatively poor adaptability to noise and interference. A signal with a higher modulation order is demodulated with a need of a higher signal-to-noise ratio. If strength of a signal received by the receiver is weak (for example, power of the signal is less than the receiving sensitivity), the receiver cannot demodulate content from the signal with the weak signal strength. Therefore, to enable the terminal to demodulate a received signal, a special management frame is usually sent by using a low modulation order. For example, a beacon frame is used to provide a time service for the terminal and announce existence of a network, and there is no acknowledgment retransmission mechanism for the beacon frame. Therefore, whether the terminal can receive the beacon frame is important. To enable the terminal to receive the beacon frame, the beacon frame is usually sent by using the MCS with the low order.

However, in the first communication method, each AP may send a beacon frame by using a high modulation order. In this way, if signal strength of a beacon frame from an AP is weak, the terminal cannot demodulate a signal carrying the beacon frame or the terminal cannot receive the beacon frame from the AP, and naturally, a roaming process is not triggered. In embodiments of this application, the AP sending the beacon frame includes the AP broadcasting the beacon frame.

In an implementation, a modulation order used by each AP is determined based on a modulation order threshold. For example, the modulation order used by each AP is higher than or equal to the modulation order threshold.

In an implementation, each AP obtains the modulation order threshold. For example, the AP receives the modulation order threshold sent by an AC, or the modulation order threshold is configured for each AP in advance. For example, the modulation order threshold is 64-QAM. Correspondingly, each AP may modulate a beacon frame signal by using 64-QAM, or may modulate the beacon frame signal by using a modulation order higher than 64-QAM (for example, 256-QAM).

In an implementation, the modulation order threshold may be determined based on a signal strength threshold. For example, the modulation order threshold is higher than or equal to a modulation order corresponding to the signal strength threshold. The modulation order corresponding to the signal strength threshold is: When the modulation order is used to modulate a signal, if signal strength of a signal received by a receiving end is greater than or equal to the signal strength threshold, the receiving end may demodulate the received signal.

For example, a mapping relationship between a plurality of signal strength thresholds and modulation order thresholds may be (pre-)configured. When any AP sends a beacon frame, the AP may determine the signal strength threshold, and may determine the modulation order threshold based on the signal strength threshold and the mapping relationship, to determine a to-be-used modulation order based on the modulation order threshold.

For the WLAN system, the signal strength threshold may be determined based on minimum signal strength required by the terminal to maintain a connection (that is, a signal strength threshold for triggering roaming by the terminal). For example, the signal strength threshold is greater than or equal to the signal strength threshold for triggering roaming by the terminal. It may be understood that, for any terminal, when signal strength of a received beacon frame is less than the threshold for triggering roaming by the terminal, the terminal scans for a roaming candidate BSSID. When the modulation order used by the AP is higher than or equal to the modulation order threshold corresponding to the signal strength threshold for triggering roaming by the terminal, if the signal strength of the beacon frame is less than the signal strength threshold for triggering roaming by the terminal, the terminal cannot demodulate the received beacon frame, and roaming is not triggered due to the weak signal strength of the beacon frame.

How to determine the signal strength threshold for triggering roaming by the terminal is not limited in embodiments of this application. For example, the signal strength threshold may be determined by collecting statistics on signal strength thresholds for triggering roaming by a plurality of terminals. For example, the signal strength threshold may be a statistical value of the signal strength thresholds for triggering roaming by the plurality of terminals, for example, a maximum value, an average value, or a quantile value. The plurality of terminals may be all terminals or a part of terminals in the WLAN system. The part of terminals may be terminals of a specified brand, terminals of a specified model, or some determined terminals (for example, terminals used by VIP users).

A manner of obtaining signal strength for triggering roaming by the terminal is not limited in embodiments of this application. The AP may request from the terminal to obtain the signal strength for triggering roaming by the terminal. For example, the AP sends a request message to the terminal, where the request message is used to request to obtain the signal strength for triggering roaming by the terminal; and the terminal sends, to the AP in response to the request message, the signal strength for triggering roaming by the terminal. For another example, the AP may calculate, based on historical signal strength for triggering roaming by the terminal, the signal strength for triggering roaming by the terminal; or the AP may obtain, through tests, the signal strength for triggering roaming by the terminal. For another example, the signal strength for triggering roaming by the terminal may be disclosed (for example, the signal strength for triggering roaming by the terminal is disclosed on a website of a manufacturer of the terminal), and the AP may obtain (via the AC or another management/control system) the signal strength for triggering roaming by the terminal from the website.

Optionally, a mapping relationship between a signal strength threshold for triggering roaming by each terminal and the modulation order threshold may be (pre-)configured. When any AP sends a beacon frame, the AP may obtain a signal strength threshold for triggering roaming by at least one terminal, and determine the modulation order threshold based on the signal strength threshold for triggering roaming by the at least one terminal and the mapping relationship, to determine a to-be-used modulation order based on the modulation order threshold corresponding to the at least one terminal. For ease of description, "the modulation order threshold corresponding to the signal strength threshold for triggering roaming by the terminal" may be referred to as "the modulation order threshold corresponding to triggering roaming by the terminal" for short. When sending the beacon frame, the AP may use a highest modulation order threshold in the modulation order threshold corresponding to triggering roaming by the at least one terminal as a lowest modulation order to be used by the AP. Alternatively, a modulation order used by the AP is higher than or equal to the highest modulation order threshold in the modulation order threshold corresponding to triggering roaming by the at least one terminal.

Alternatively, a mapping relationship between the receiving sensitivity (or minimum signal strength) and the modulation order may be (pre-)configured, and when sending the beacon frame, each AP may determine a to-be-used modulation order based on the signal strength threshold for triggering roaming by the terminal and the mapping relationship. For example, receiving sensitivity corresponding to the modulation order used by the AP needs to be greater than the signal strength threshold for triggering roaming by the terminal.

For example, Table 1 shows a mapping relationship between the receiving sensitivity and the modulation order. Table 1 shows the mapping relationship between the receiving sensitivity and the modulation order when the AP uses or does not use a dual carrier modulation (dual carrier modulation, DCM) technology. It should be noted that the mapping relationship between the receiving sensitivity and the modulation order in Table 1 is merely an example, and receiving sensitivity corresponding to a same modulation order may be another value. For example, in Table 1, when the DCM is not used, receiving sensitivity corresponding to 16-QAM may alternatively be another possible value other than -74 dBm and -70 dBm.

**Table 1**

| Modulation scheme | | Bit rate | Receiving sensitivity (dBm) |
|---|---|---|---|
| DCM not used | DCM used | | |
| N/A | BPSK | 1/2 | -82 |
| BPSK | QPSK | 1/2 | -82 |
| QPSK | 16-QAM | 1/2 | -79 |
| QPSK | 16-QAM | 3/4 | -77 |
| 16-QAM | N/A | 1/2 | -74 |
| 16-QAM | N/A | 3/4 | -70 |
| 64-QAM | N/A | 2/3 | -66 |
| 64-QAM | N/A | 3/4 | -65 |
| 64-QAM | N/A | 5/6 | -64 |
| 256-QAM | N/A | 3/4 | -59 |
| 256-QAM | N/A | 5/6 | -57 |
| 1024-QAM | N/A | 3/4 | -54 |
| 1024-QAM | N/A | 5/6 | -52 |

If the signal strength threshold for triggering roaming by the terminal is -70 dBm, a signal with signal strength less than -70 dBm (for example, -74 dBm) is considered as a signal with weak signal strength. It can be learned from Table 1 that, when a modulation order that can be used by the AP is lower than or equal to 16-QAM, the terminal may demodulate a beacon frame with signal strength less than -70 dBm. When the receiving sensitivity corresponding to the modulation order used by the AP is greater than or equal to the signal strength threshold for triggering roaming by the terminal (for example, the modulation order used by the AP is higher than or equal to 64-QAM), the terminal cannot demodulate a beacon frame with signal strength less than -70 dBm. Therefore, even if the terminal receives the beacon frame with weak signal strength, when the signal strength of the received beacon frame is less than -70 dBm, the terminal cannot demodulate the beacon frame or cannot receive the beacon frame, and naturally, the terminal does not trigger roaming.

Because operating channel bandwidths of the AP are different, requirements on the receiving sensitivity may also be different, and requirements on the modulation order may also be different. From this perspective, the modulation order used by the AP may also be determined based on the operating channel bandwidth of the AP. A mapping relationship between the receiving sensitivity, the channel bandwidth, and the modulation order may be (pre-)configured. When any AP sends a beacon frame, the AP may determine a to-be-used modulation order based on an operating channel bandwidth of the AP and the mapping relationship. Alternatively, the AP may select a mapping relationship between the receiving sensitivity and the modulation order based on the operating channel bandwidth. When sending a beacon frame, the AP may determine a to-be-used modulation order based on the mapping relationship and the signal strength threshold for triggering roaming by the terminal.

For example, Table 2 shows a mapping relationship between the receiving sensitivity, the modulation order, and the channel bandwidth. Table 2 shows the mapping relationship between the receiving sensitivity, the channel bandwidth, and the modulation order when the AP uses or does not use the DCM technology.

**Table 2**

| Modulation scheme | | Bit rate | Receiving sensitivity (20 MHz) (dBm) | Receiving sensitivity (40 MHz) (dBm) | Receiving sensitivity (80 MHz) (dBm) | Receiving sensitivity (160 MHz)/(80+80 MHz) (dBm) |
|---|---|---|---|---|---|---|
| DCM not used | DCM used | | | | | |
| N/A | BPSK | 1/2 | -82 | -79 | -76 | -73 |
| BPSK | QPSK | 1/2 | -82 | -79 | -76 | -73 |
| QPSK | 16-QAM | 1/2 | -79 | -74 | -73 | -70 |
| QPSK | 16-QAM | 3/4 | -77 | -76 | -71 | -68 |
| 16-QAM | N/A | 1/2 | -74 | -71 | -68 | -65 |
| 16-QAM | N/A | 3/4 | -70 | -67 | -64 | -61 |
| 64-QAM | N/A | 2/3 | -66 | -63 | -60 | -57 |
| 64-QAM | N/A | 3/4 | -65 | -62 | -59 | -56 |
| 64-QAM | N/A | 5/6 | -64 | -61 | -58 | -55 |
| 256-QAM | N/A | 3/4 | -59 | -56 | -53 | -50 |
| 256-QAM | N/A | 5/6 | -57 | -54 | -51 | -48 |
| 1024-QAM | N/A | 3/4 | -54 | -51 | -48 | -45 |
| 1024-QAM | N/A | 5/6 | -52 | -49 | -46 | -43 |

It is assumed that the signal strength threshold for triggering roaming by the terminal is -70 dBm. When a channel bandwidth of the beacon frame is 20 MHz, it can be learned from Table 2 that, when the modulation order used by the AP is lower than or equal to 16-QAM, the terminal may demodulate a beacon frame with signal strength less than -70 dBm. When the receiving sensitivity corresponding to the modulation order used by the AP is greater than or equal to the signal strength threshold for triggering roaming by the terminal (for example, the modulation order used by the AP is higher than or equal to 64-QAM), the terminal cannot demodulate a beacon frame with signal strength less than -70 dBm. Therefore, even if the terminal receives the beacon frame with weak signal strength (for example, the signal strength of the beacon frame is less than -70 dBm), the terminal cannot demodulate the beacon frame or cannot receive the beacon frame, and naturally, the terminal does not trigger roaming. Similarly, it is assumed that the signal strength threshold for triggering roaming by the terminal is -64 dBm. When a channel bandwidth of the beacon frame is 40 MHz, and the modulation order used by the AP is higher than or equal to 256-QAM, the terminal cannot demodulate a beacon frame with signal strength less than -64 dBm. Therefore, even if the terminal receives the beacon frame with weak signal strength (for example, the signal strength of the beacon frame is less than -64 dBm), the terminal cannot demodulate the beacon frame or cannot receive the beacon frame, and naturally, the terminal does not trigger roaming.

It should be noted that the mapping relationship between the receiving sensitivity, the channel bandwidth, and the modulation order in Table 2 is merely an example, and receiving sensitivity corresponding to a same modulation order may be another value. For example, in Table 2, in 20 MHz, receiving sensitivity corresponding to 16-QAM may alternatively be another possible value other than -74 dBm and -70 dBm.

Modulation orders used by different Aps to send beacon frames may be the same or different, provided that the terminal cannot demodulate or receive a beacon frame with weak signal strength. An AP 1 and an AP 2 are used as an example. A modulation order used by the AP 1 may be 64-QAM, and a modulation order used by the AP 2 may also be 64-QAM. For another example, a modulation order used by the AP 1 may be 64-QAM, and a modulation order used by the AP 2 may be 256-QAM.

The following describes the communication methods provided in embodiments of this application in detail with reference to the accompanying drawings.

It should be noted that the communication method in embodiments of this application relates to interaction between a plurality of access points and a terminal, or may relate to interaction between access points. In some scenarios, the access points have a same role, and the access points perform a same step. In some scenarios, different access points have different roles. For example, some access points are primary access points, and some access points are secondary access points. In this case, steps performed by the secondary access points are the same. The primary access point may be selected by an AC from the plurality of access points. For example, the AC may randomly select one access point from the plurality of access points as the primary access point. This is simple. For another example, the AC may select an access point at a relatively central location of the plurality of access points as the primary access point. This can reduce a quantity of hops or relays between the primary access point and a secondary access point at a network edge. The quantity of hops or relays is a quantity of access points through which information of one access point is forwarded to another access point. For example, if a distance between an access point A and an access point B is long, when the access point A sends a beacon to the access point B, the beacon may be forwarded (relayed) to the access point B through another access point. A quantity of other access points between the access point A and the access point B is the quantity of hops or relays. After selecting the primary access point, the AC sends configuration information to each secondary access point, where the configuration information may indicate which access point is the primary access point and which access point is the secondary access point.

The primary access point may determine preset beacon transmission time based on a clock of the primary access point, and send a beacon frame at the preset beacon transmission time. For example, when a ratio of the clock of the primary access point to a beacon transmission period is an integer, the preset beacon transmission time is reached. For example, the beacon transmission period is 102400 µs. When a ratio of the clock of the primary access point to 102400 µs is an integer, the preset beacon transmission time of the primary access point is reached. The secondary access point may decide, based on a received beacon frame, whether to send a beacon frame and how to send the beacon frame (which is described in detail below). The beacon transmission period may be configured by the AC. For example, the configuration information sent by the AC to each access point includes the beacon transmission period. The beacon transmission period may alternatively be predefined. A length of the beacon transmission period is not limited in embodiments of this application. For example, the beacon transmission period may be 100 TUs, and 1 TU=1024 µs. Alternatively, the beacon transmission period may be 200 TUs, 400 TUs, or the like.

In embodiments of this application, steps performed by an access point may be implemented by the access point, or may be implemented by a component (for example, a module like a chip, another processing unit, or a processor) in the access point. For example, the access point may be the first access point or the second access point in FIG. 1, or may be a chip (system) in the first access point or the second access point in FIG. 1. Steps performed by a terminal may be implemented by the terminal, or may be implemented by a component (for example, a module like a chip, a processing unit, or a processor) in the terminal.

The following first describes the first communication method provided in embodiments of this application.

FIG. 4 is a schematic flowchart of a communication method 400 according to an embodiment of this application. The communication method 400 is the first communication method. In FIG. 4, for example, the communication method 400 is performed by a first access point, a second access point, a third access point, and a terminal, and the communication method 400 is described from a perspective of interaction between the first access point (AP 1), the second access point (AP 2), the third access point (AP 3), and the terminal. It should be understood that the communication method 400 may alternatively be implemented by another apparatus, for example, performed by a chip or a communication apparatus having a communication function. As shown in FIG. 4, a procedure of the first communication method 400 includes the following steps.

S401: The first access point sends a first beacon frame, where the first beacon frame includes a first BSSID, and a first modulation order is used.

In a beacon transmission period, when preset beacon transmission time is reached, the first access point may send the first beacon frame. The first beacon frame carries the first BSSID, to notify the terminal of existence of the first access point. The preset beacon transmission time may be determined based on the beacon transmission period and a clock of the first access point. For example, a beacon transmission period is 102400 µs. When a ratio of the clock of the first access point to 102400 µs is an integer, the preset beacon transmission time is reached. In an implementation, sending of the first beacon frame by the first access point may be triggered by a timer, and timing duration of the timer is, for example, 102400 µs.

The first access point may modulate the first beacon frame by using the first modulation order. As described above, to prevent the terminal from receiving a beacon frame with weak signal strength, so as to reduce triggering of a roaming process, the first access point may determine a to-be-used modulation order based on a modulation order threshold corresponding to triggering roaming by at least one terminal. For determining of the modulation order, refer to the foregoing related content. Details are not described herein again.

S402: The second access point sends a second beacon frame, where the second beacon frame includes the first BSSID, and a second modulation order is used.

Similar to the first access point, the second access point may also send a beacon frame. The second beacon frame also carries the first BSSID. Considering that, in a WLAN system, distances from access points to the terminal are different, and signal strength of beacon frames sent by the access points to the terminal may also be different. To enable the terminal to filter out the beacon frame with weak signal strength, so as to reduce a quantity of times of triggering the roaming process, a high modulation order may be used for the second beacon frame. For example, the second modulation order may be used for the second beacon frame. A manner in which the second access point determines the second modulation order is the same as a manner in which the first access point determines the first modulation order. Details are not described herein again.

The second modulation order may be the same as the first modulation order. For example, the first access point and the second access point may select a modulation order that is one order higher than a modulation order corresponding to signal strength for triggering roaming by the terminal. Alternatively, the second modulation order may be different from the first modulation order. For example, both the first access point and the second access point may randomly select a modulation order that is higher than the modulation order corresponding to the signal strength for triggering roaming by the terminal.

S403: The third access point sends a third beacon frame.

Similar to the second access point, another access point (for example, the third access point) in the WLAN system may also send a beacon frame (for example, the third beacon frame). The third beacon frame carries the first BSSID, and a high modulation order is used. For example, 64-QAM is used for the third beacon frame.

It may be understood that other access points similar to the second access point or the third access point also send a beacon frame, and the sent beacon frames each carry the first BSSID and a high modulation order is used, so that the terminal can filter out the beacon frame with weak signal strength.

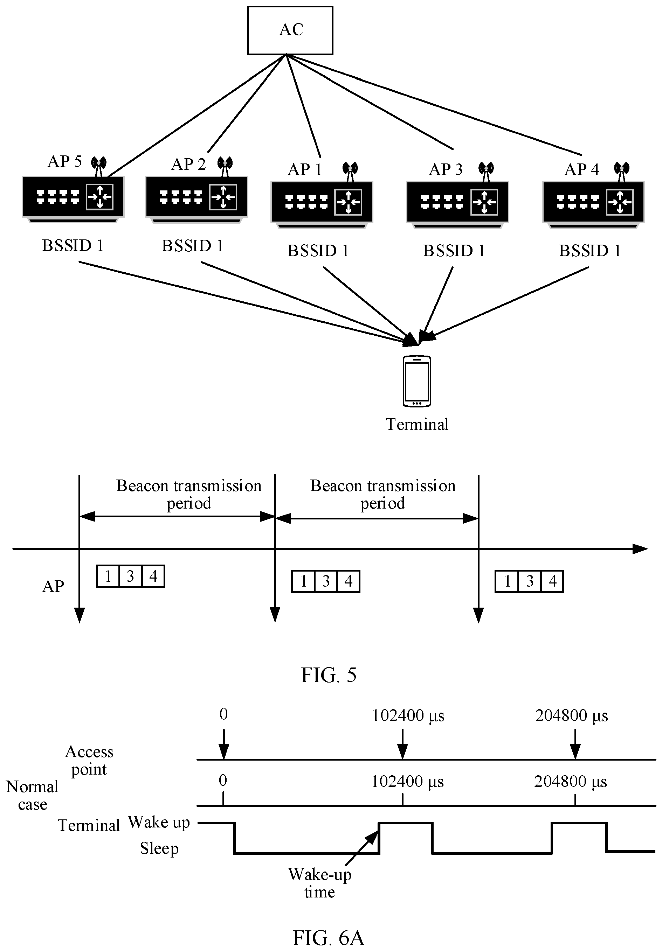

For example, FIG. 5 is a diagram of a WLAN system. In FIG. 5, for example, a first WLAN system includes an AP 1 to an AP 5. The AP 1 to the AP 5 separately send a beacon frame, where the beacon frames sent by the AP 1 to the AP 5 each carry the first BSSID, and a high modulation order is used. Therefore, a terminal does not receive a weak beacon frame from the AP 1 to the AP 5. As shown in FIG. 5, the AP 2 and the AP 5 are far from the terminal, and signal strength of beacon frames from the AP 2 and the AP 5 to the terminal is weak. Although the AP 2 and the AP 5 send the beacon frames, the terminal receives only beacon frames sent by the AP 1, the AP 3, and the AP 4.

In the communication method 400 provided in this embodiment of this application, beacon frames sent by access points carry a same BSSID and a high modulation order is used, so that the terminal can filter out a beacon frame with weak signal strength, to reduce a quantity of times of triggering the roaming process by the terminal, so as to reduce a service transmission delay.

The beacon frame sent by each access point may further carry a timestamp, so that another access point or the terminal can learn of transmission time of the beacon frame based on the timestamp carried in the received beacon frame. Depending on whether the access point is a primary access point or a secondary access point, a manner of determining the timestamp carried in the beacon frame sent by each access point is also different.

In a scenario, the first access point, the second access point, and the third access point may be time-synchronized in advance, and there is no primary/secondary relationship between the first access point, the second access point, and the third access point. In this scenario, the access points sequentially send the beacon frames when preset beacon transmission time is reached. As described above, the preset beacon transmission time may be determined based on the beacon transmission period and a clock of the access point, and the beacon transmission period may be configured by an AC. For example, the first access point sends the first beacon frame when the preset beacon transmission time is reached; the second access point sends the second beacon frame when the preset beacon transmission time is reached; and the third access point sends the third beacon frame when the preset beacon transmission time is reached. A means used to perform time synchronization of the access points is not limited in this embodiment of this application, provided that time synchronization can be implemented. Time synchronization precision between the first access point, the second access point, and the third access point may be at a sub-millisecond (ms) level.

The first beacon frame may carry a first timestamp, and the first timestamp may be system time obtained from a system clock of the first access point. The second beacon frame may carry a second timestamp, and the second timestamp may be system time obtained from a system clock of the second access point. The third beacon frame may carry a third timestamp, and the third timestamp may be system time obtained from a system clock of the third access point. Alternatively, the first timestamp, the second timestamp, and the third timestamp may all be preset timestamps. The preset timestamp may be beacon period number × beacon period, or beacon period number × beacon period + preset offset. A specific value of the preset offset is not limited in this embodiment of this application.

Because the first access point, the second access point, and the third access point are time-synchronized, different access points may have same preset beacon transmission time, causing a conflict in sending of beacon frames. Therefore, a sequence of sending the beacon frames by the access points may be set, and a plurality of access points send beacon frames in sequence, so that the conflict can be reduced.

How to set the sequence of sending the beacon frames by the access points is not limited in this embodiment of this application. For example, the AC may configure the sequence of sending the beacon frames by the access points. For another example, interruption time of a timer may be set for each access point, and each access point sends the beacon frame when the timer is interrupted. Interruption time of timers of different access points are different, so that the plurality of access points send the beacon frames in sequence. For example, interruption time of a timer configured for the AP 1 is a moment T, interruption time of a timer configured for the AP 2 is T+first offset (offset), and interruption time of a timer configured for the AP 3 is T+2*first offset, and so on.

In another scenario, the access points in the WLAN system are classified into a primary access point and a secondary access point. For example, the first access point is a primary access point, and the second access point and the third access point are secondary access points. The primary access point sends a beacon frame at the preset beacon transmission time, where the preset beacon transmission time is an integer multiple of the beacon transmission period. In this case, a timestamp carried in a beacon frame sent by the secondary access point may be a sum of a timestamp carried in a received beacon frame and a processing delay. For example, the first access point sends the first beacon frame, where the first beacon frame carries the first timestamp, and the second access point receives the first beacon frame from the first access point. After receiving the first beacon frame, the second access point sends the second beacon frame, where the second beacon frame carries the second timestamp, and the second timestamp may be a sum of the first timestamp and a processing delay. The processing delay is an interval between time at which the second access point receives the first beacon frame and time at which the second access point sends the second beacon frame. For example, the second access point receives the first beacon frame at a moment T1. The second access point performs framing of the second beacon frame, obtains the second beacon frame at time T2, and sends the second beacon frame at time T3. The processing delay is T3-T1. It can be learned that, due to the processing delay, the timestamp carried in the beacon frame sent by each secondary access point is a time period before or after an integer multiple of a time point of the beacon period.

Generally, there is no acknowledgment retransmission mechanism for the beacon frame, and the terminal may miss one or more beacon frames. To reduce impact caused by missing the beacon frame by the terminal, the terminal needs to maintain approximate time synchronization with an entire BSS. When receiving a beacon frame sent by an access point, the terminal obtains a timestamp from the beacon frame and locally synchronizes the timestamp, so that the terminal keeps time synchronization with the access point or the terminal keeps synchronization with the timestamp of the sent beacon frame.

To reduce power consumption, some terminals usually sleep, and rely on synchronized local clocks to wake up from a sleep mode within a time period before the preset beacon transmission time. However, a processing delay corresponding to the secondary access point that is far from the primary access point is large, and an offset between a timestamp of a beacon frame sent by the secondary access point and an integer multiple of the beacon transmission period (that is, the preset beacon transmission time) is large. If the terminal keeps time synchronization with the secondary access point, the terminal may miss a beacon frame, that is, a packet loss occurs on the terminal.

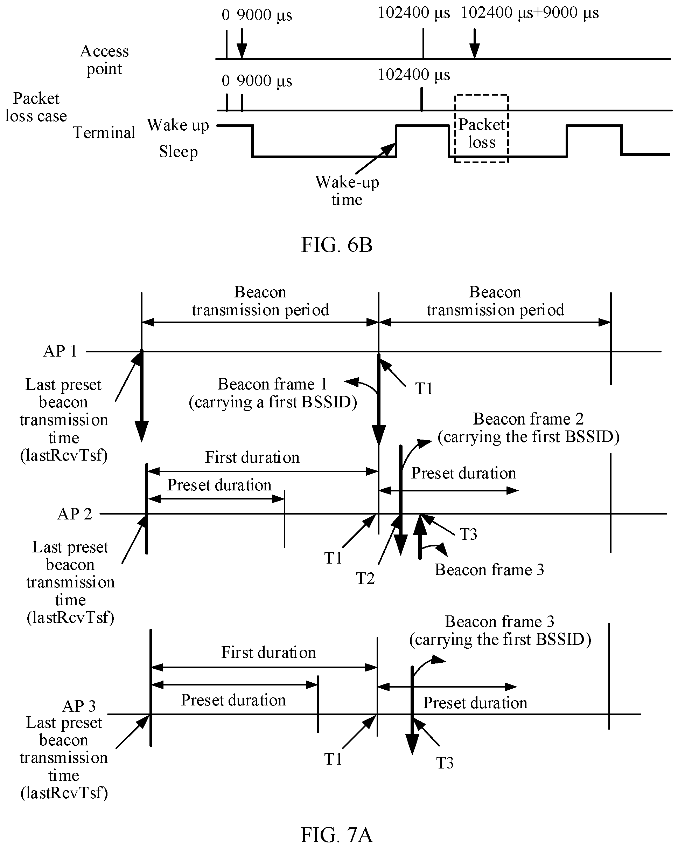

For ease of understanding, FIG. 6A and FIG. 6B are principle diagrams of packet loss on a terminal. In FIG. 6A and FIG. 6B, a beacon transmission period is 102400 µs, preset beacon transmission time is an integer multiple of 102400 µs, and terminal wake-up time is always before the preset beacon transmission time. As shown in FIG. 6A, a timestamp carried in a beacon frame is an integer multiple of the beacon transmission period, and beacon transmission time is also an integer multiple of the beacon transmission period. The terminal synchronizes a clock of the terminal based on the timestamp in the beacon frame. For example, after receiving the beacon frame, the terminal locally synchronizes the timestamp, to wake up the terminal at correct time. Therefore, the terminal can always receive a beacon frame from an access point. It may be understood that, a secondary access point always accumulates a processing delay. Therefore, there is a large offset between a timestamp carried in a beacon frame sent by an access point at a network edge and an integer multiple of the beacon transmission period. As shown in FIG. 6B, assuming that an accumulated processing delay is 9000 µs, and a timestamp of sending of a primary access point is 0 µs, a timestamp of a 1^{st} beacon frame sent by the secondary access point at the network edge is 0+9000 µs. The terminal receives the beacon frame, locally synchronizes the timestamp, and starts timing, to be specific, the terminal starts timing from 9000 µs. When the timing is about to reach 102400 µs, the terminal wakes up the terminal. After a period of wake-up time, the terminal enters a sleep mode. Based on the timing of the terminal, the secondary access point at the network edge sends a beacon again at 102400+9000 µs, and the terminal may enter the sleep mode before time at which the access point sends the beacon frame (as shown by a dashed line in the figure). Therefore, the terminal cannot receive the beacon frame from the access point, that is, a packet loss occurs.

In an implementation, the timestamp carried in the beacon frame sent by the secondary access point may be the same as a timestamp carried in a beacon frame sent by the primary access point. This helps reduce the packet loss on the terminal and reduce processing complexity of the second access point. For example, both the timestamp carried in the beacon frame sent by the secondary access point and the timestamp carried in the beacon frame sent by the primary access point are preset timestamps. The preset timestamp may be calculated as: beacon period number × beacon period, or the preset timestamp is calculated as: beacon period number × beacon period + preset offset. A specific value of the preset offset is not limited in this embodiment of this application.

Each secondary access point may send the beacon frame by using a high modulation order, so that the terminal cannot demodulate (that is, filters out) a beacon frame with weak signal strength. The beacon frame is used to enable the terminal to learn of existence of a network. In this embodiment of this application, beacon frames sent by access points carry a same BSSID. If the access point sends the beacon frames a plurality of times in short time, a beacon frame subsequently sent is unnecessary, and processing load of the terminal is increased additionally. To reduce a quantity of sent beacon frames, the secondary access point may determine whether to send the beacon frame within a time period.

In an implementation, the secondary access point determines, by comparing first duration with preset duration, whether the beacon transmission time is reached. The first duration is a time interval between a first moment and a second moment, the first moment is a moment at which the secondary access point currently receives a beacon frame carrying the BSSID, and the second moment is a moment at which the secondary access point last sends a beacon frame carrying the BSSID, or the second moment is a moment at which the secondary access point last receives a trigger for causing the secondary access point to send a beacon frame carrying the BSSID. If the first duration is greater than or equal to (or greater than) the preset duration, the secondary access point sends a beacon frame carrying the same BSSID; or if the first duration is less than (or less than or equal to) the preset duration, the secondary access point does not send the beacon frame carrying the same BSSID. The preset duration is less than the beacon transmission period. For example, the preset duration may be 1/2 of the beacon transmission period, 3/4 of the beacon transmission period, or another possible value. In addition, the preset duration is greater than total duration in which a channel is occupied for sending a beacon frame by at least one access point. A quantity of the at least one access point may be a minimum or maximum quantity of hops or relays that needs to be passed from the first access point to the access point at the network edge. The access point at the network edge is an access point at an edge of the WLAN system. In this way, the secondary access point may send the beacon frame only once in one beacon transmission period (for example, 102400 µs), to prevent the secondary access point from sending beacon frames a plurality of times in a time period, and reduce infinite loop sending of the beacon frames.

The second access point is used as an example. If duration (the first duration) between a receiving moment at which a beacon frame carrying the first BSSID is currently received and a moment at which a beacon frame carrying the first BSSID is last sent (or a receiving moment at which a trigger for causing sending of a beacon frame carrying the first BSSID is last received) is less than or equal to the preset duration, the second access point determines that the beacon transmission time has not been reached, and does not need to send the beacon frame. If the first duration is greater than the preset duration, the second access point sends the beacon frame at a current moment. From this perspective, that the first duration is greater than the preset duration may be used as a determining condition (for example, referred to as a first condition) for the second access point to determine whether to send the beacon frame. When the first condition is met, the second access point determines to send the beacon frame.

The second access point may record time at which a beacon frame with the same BSSID is received each time and time at which a beacon frame carrying the same BSSID is last sent. For example, time at which the second access point currently receives a beacon frame is denoted as curTsf, and time of sending a beacon frame by the second access point before curTsf (that is, last transmission time of the beacon frame) is denoted as lastRcvTsf. In this case, the first duration is (curTsf-lastRcvTsf). When (curTsf-lastRcvTsf) is less than or equal to the preset duration, the second access point determines that the beacon transmission time has not been reached at the current moment, and does not need to send the beacon frame. When (curTsf-lastRcvTsf) is greater than the preset duration, the second access point determines that the beacon transmission time has been reached, updates lastRcvTsf to curTsf, and sends the beacon frame at the current moment.

For ease of understanding, FIG. 7A is a principle diagram of determining, by an access point, whether preset beacon transmission time is reached. In FIG. 7A, for example, a WLAN system includes an AP 1 to an AP 3. The AP 1 is a primary access point, and both the AP 2 and the AP 3 are secondary access points. In FIG. 7A, for example, the AP 2 and the AP 3 determine whether to send beacon frames. In FIG. 7A, it is assumed that the AP 1 sends a beacon frame 1 at a moment T1, the AP 2 receives the beacon frame 1 at the moment T1, and the AP 3 also receives the beacon frame 1 at the moment T1. The AP 2 receives the beacon frame 1, updates curTsf to T1, and compares curTsf with last preset beacon transmission time lastRcvTsf. When (curTsf-lastRcvTsf) is greater than preset duration, the AP 2 determines that the beacon transmission time has been reached, and updates lastRcvTsf to curTsf, that is, updates lastRcvTsf to T1. In addition, the AP 2 sends a beacon frame (for example, a beacon frame 2) at a moment T2. Similarly, the AP 3 receives the beacon frame 1, updates curTsf to T1, and compares curTsf with the last beacon transmission time lastRcvTsf. When (curTsf-lastRcvTsf) is greater than the preset duration, the AP 3 determines that the beacon transmission time has been reached, and updates lastRcvTsf to curTsf, that is, updates lastRcvTsf to T1. In addition, the AP 3 sends a beacon frame (for example, a beacon frame 3) at a moment T3. It may be understood that, because the AP 2 and the AP 3 use a random backoff mechanism to send the beacon frames, there is a high probability that T3 is not equal to T2. For the AP 2, the AP 2 also receives the beacon frame 3 sent by the AP 3. In this case, curTsf=T3, and lastRcvTsf=T1. Because first duration (that is, T3-T1) is less than or equal to the preset duration, the AP 2 determines, based on the received beacon frame 3, that the beacon transmission time is not reached, and does not send the beacon frame (this is used as an example in FIG. 7A), to ensure that the AP 2 sends a beacon frame only once within one beacon transmission period.

If signal strength of a beacon frame received by an access point from another access point is strong, it indicates that the two access points are close to each other, and coverage areas of the two access points overlap greatly. For a terminal, accessing either of the two access points makes a little difference. Therefore, each secondary access point may further determine, based on signal strength of a received beacon frame, whether to send a beacon frame, to reduce as much as possible a quantity of access points that send beacon frames while ensuring the coverage area, so as to reduce unnecessary beacon frames to be demodulated by the terminal and reduce power consumption of the terminal. "Determining, based on the signal strength of the received beacon frame, whether to send the beacon frame" may be replaced with "determining, based on the signal strength of the received beacon frame, whether the beacon transmission time is effective". If the beacon transmission time is effective, the secondary access point sends the beacon frame at the beacon transmission time. On the contrary, if the beacon transmission time is not effective, the secondary access point does not send the beacon frame at the beacon transmission time. Regardless of whether the beacon transmission time is effective, the access point updates lastRcvTsf to curTsf.

For example, if signal strength of a beacon frame that meets a first condition and that is received by a secondary access point is weak (for example, less than or equal to preset signal strength), the beacon transmission time is effective; or if the signal strength of the beacon frame that meets the first condition and that is received by the secondary access point is strong (for example, greater than the preset signal strength), it may be considered that a coverage area of the secondary access point overlaps most of a coverage area of another access point, a network coverage area can be ensured, and the beacon transmission time is not effective. From this perspective, that the signal strength of the beacon frame received by the secondary access point is less than or equal to the preset signal strength is a determining condition (for example, referred to as a second condition) for the second access point to determine whether to send a beacon frame. When the first condition and the second condition are met, the second access point determines to send the beacon frame. In this way, any access point can be prevented from sending beacon frames a plurality of times within one beacon transmission period, and access points that send beacon frames may be reduced, to further reduce a possibility of triggering a roaming process by the terminal.

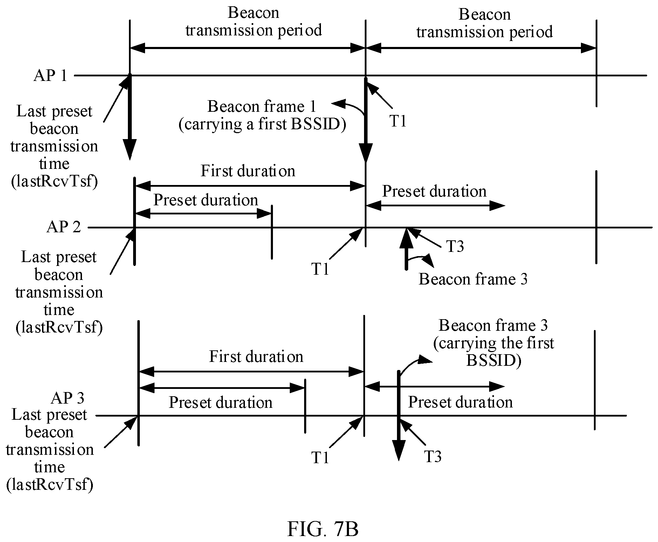

For ease of understanding, FIG. 7B is a principle diagram of determining, by an access point, whether to send a beacon frame. In FIG. 7B, an AP 1 is a primary access point, and both an AP 2 and an AP 3 are secondary access points. It is assumed that the AP 2 is relatively close to the AP 1, and the AP 3 is relatively far from the AP 1. Correspondingly, signal strength of a beacon frame received by the AP 2 from the AP 1 is relatively strong, and signal strength of a beacon frame received by the AP 3 from the AP 1 is relatively weak. A difference between FIG. 7B and FIG. 7A lies in that, in addition to determining whether the beacon transmission time is reached, the AP 2 or the AP 3 further determines whether to send the beacon frame at the beacon transmission time. When the signal strength of the beacon frame that meets the first condition is greater than the preset signal strength, the AP 2 or the AP 3 does not send the beacon frame either.

As shown in FIG. 7B, the AP 1 sends a beacon frame 1 at a moment T1, the AP 2 receives the beacon frame 1 at the moment T1, and the AP 3 also receives the beacon frame 1 at the moment T1. The AP 2 receives the beacon frame 1, updates curTsf to T1, and compares curTsf with last beacon transmission time lastRcvTsf. When (curTSF-lastRcvTsf) is greater than preset duration, the AP 2 determines that the beacon transmission time is reached. In addition, the AP 2 updates lastRcvTsf to curTsf, that is, T1. Further, the AP 2 compares signal strength of the beacon frame 1 with the preset signal strength. If the signal strength of the beacon frame 1 is less than the preset signal strength, the AP 2 sends the beacon at the beacon transmission time. If the signal strength of the beacon frame 1 is greater than the preset signal strength, the AP 2 does not send the beacon at the beacon transmission time (this is used as an example in FIG. 7B). Similarly, the AP 3 receives the beacon frame 1, updates curTsf to T1, and compares curTsf with the last beacon transmission time lastRcvTsf. When (curTSF-lastRcvTsf) is greater than the preset duration, the AP 3 determines that the beacon transmission time is reached. In addition, the AP 3 updates lastRcvTsf to curTsf, that is, T1. Further, the AP 3 compares the signal strength of the beacon frame 1 with the preset signal strength. If the signal strength of the beacon frame 1 is less than or equal to the preset signal strength, to ensure a network coverage, the AP 3 determines that the beacon needs to be sent at the beacon transmission time, and the AP 3 sends a beacon frame 3 (this is used as an example in FIG. 7B). It may be understood that, for the AP 2, the AP 2 also receives the beacon frame 3 sent by the AP 3. In this case, curTsf=T3, and lastRcvTsf=T1. When first duration (that is, T3-T1) is less than or equal to the preset duration, the AP 2 does not send the beacon frame (this is used as an example in FIG. 7B).

Optionally, if the secondary access point has not sent the beacon frame, the secondary access point may send the beacon frame when receiving a 1^{st} beacon frame, and subsequently determine, according to the method described above, whether to send the beacon frame.

Embodiments of this application further provide a second communication method. In the second communication method, signal strength of a beacon frame obtained by a terminal may be greater, so that signal strength of all beacon frames received by the terminal is strong, to reduce triggering of a roaming process.

In an implementation, the second communication method is based on a multipath effect, so that the signal strength of the beacon frame obtained by the terminal is greater. For example, beacon frames sent by different APs to the terminal carry a same BSSID. For the terminal, the different APs are one AP. Based on a multipath effect idea, the beacon frames received from the different APs may be superimposed as one beacon frame, so that the signal strength of the beacon frame finally obtained by the terminal is greater. "Superimposing a plurality of beacon frames" means superposing signals carrying a plurality of beacon frames. For ease of understanding, the multipath effect is first described.

The multipath effect means that electromagnetic waves transmitted by a transmitter are reflected, refracted, and diffracted from a plurality of objects and arrive at a receiver through different paths. The multipath effect occurs during radio signal transmission. In other words, signals are sent to a receiving end through a plurality of paths. Specifically, in a WLAN system, beacon frames of different APs are transmitted to the terminal through different transmission paths, and a transmission path from one AP to the terminal may be considered as one transmission path of the beacon frame to the terminal. A beacon frame received by the terminal is a superposition of the beacon frames from the different APs. Lengths of transmission paths from the beacon frames of the different APs to the terminal are different, and signal attenuation, phase shifts, and arrival time (that is, delays) at the terminal are also different. Different delays of different paths cause a phase difference, and consequently, wave delays of different frequencies are different, and a waveform of a same frequency changes. Therefore, after beacon frames of a plurality of APs are superimposed, intensity values of a superimposed beacon frame are different in frequency domain.

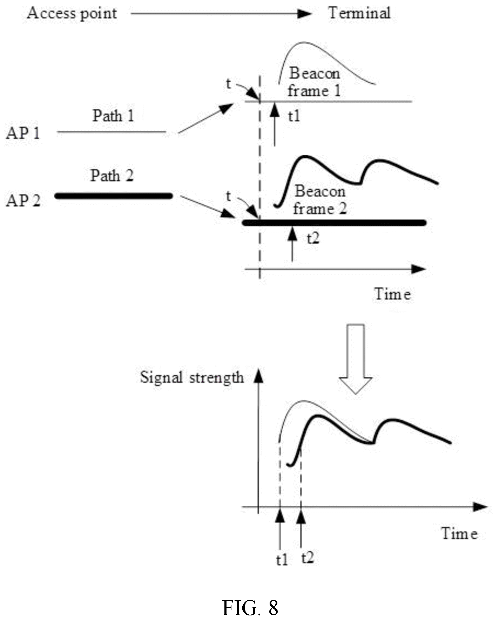

For example, FIG. 8 is a schematic flowchart of sending beacon frames to a terminal through different transmission paths by two APs. In FIG. 8, for example, an AP 1 sends a beacon frame through a path 1, and an AP 2 sends a beacon frame through a path 2. Due to delays of the path 1 and the path 2, time at which the beacon frame sent by the AP 1 reaches the terminal through the path 1 may be different from time at which the beacon frame sent by the AP 2 reaches the terminal through the path 2. Absolute time t is used as a reference time point. The time at which the beacon frame sent by the AP 1 reaches the terminal through the path 1 is t1, and the time at which the beacon frame sent by the AP 2 reaches the terminal through the path 2 is t2, where t1 is not equal to t2. The different delays of the path 1 and the path 2 cause a phase difference. As a result, waveforms of the beacon frame 1 and the beacon frame 2 have different attenuation degrees in frequency domain, and intensity values of a superimposed beacon frame are different in frequency domain.

To increase signal strength of a beacon frame obtained by the terminal, in the second communication method, a plurality of APs send a same beacon frame at closely spaced time intervals. "The same beacon frame" means "a same waveform of a signal carrying a beacon frame". Beacon frames sent by different APs include same content, use a same scrambling code, and use a same modulation scheme, and therefore, beacon frames sent by the different APs are the same. It may be (pre-)configured that scrambling codes and modulation schemes used by the access points to send the beacon frames are the same, so that sending of the beacon frames by the plurality of APs implements a multipath effect. It may be understood that the beacon frame sent by the AP usually carries a BSSID, a timestamp, and the like. For the BSSID, in this embodiment of this application, the beacon frames sent by the different APs to the terminal carry a same BSSID. For the timestamp, in an implementation, a primary access point may indicate, to each secondary access point, a timestamp to be carried in a beacon frame, and each secondary access point fills in the timestamp based on the indication of the primary access point, so that the timestamps carried in the beacon frames sent by the access points are consistent. In another implementation, the access points may be time-synchronized, and a timestamp carried in a beacon frame sent by each access point may be system time obtained from a system clock of each access point. Because the access points are time-synchronized, it may be considered that systems of the access points are synchronized or approximately synchronized. It should be noted that "the access points send the beacon frames at the same time" includes that the access points send the beacon frames at the close time, so that the plurality of access points implement the multipath effect.

The following describes the second communication method in detail with reference to the accompanying drawings.

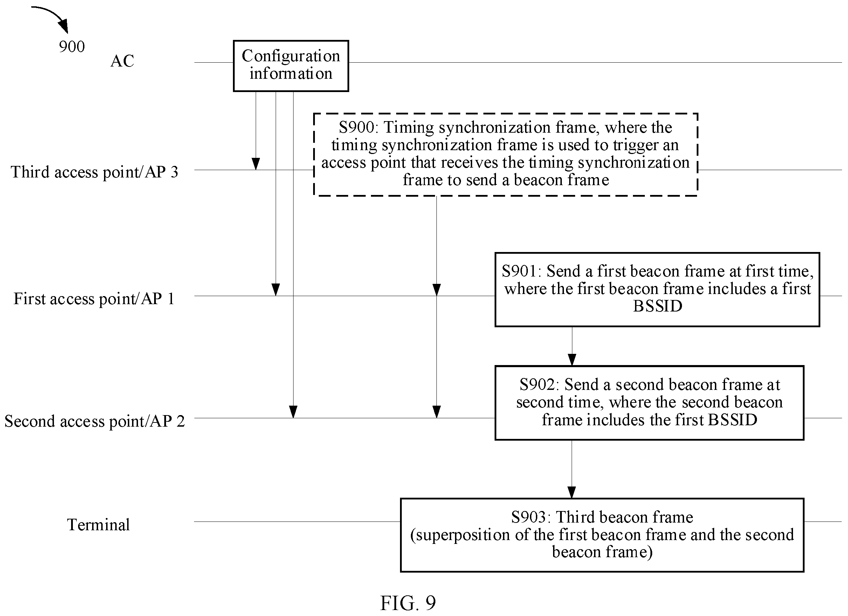

FIG. 9 is a schematic flowchart of a communication method 900 according to an embodiment of this application. The communication method 900 is the second communication method. In FIG. 9, for example, the communication method 900 is performed by a first access point (AP 1), a second access point (AP 2), and a terminal, and the communication method 900 is described from a perspective of interaction between the first access point, the second access point, and the terminal. It should be understood that the communication method 900 may alternatively be implemented by another apparatus, for example, performed by a chip or a communication apparatus having a communication function. As shown in FIG. 9, a procedure of the communication method 900 includes the following steps.

S901: The first access point sends a first beacon frame at first time, where the first beacon frame includes a first BSSID.

S902: The second access point sends a second beacon frame at second time, where the second beacon frame includes the first BSSID, and the first time is the same as the second time, or an interval between the first time and the second time is less than a preset interval.

S903: The terminal receives a third beacon frame, where the third beacon frame is a superposition of the first beacon frame and the second beacon frame.

Both the first access point and the second access point send the beacon frames at the same time or close time, and waveforms of the beacon frames sent by the first access point and the second access point are the same, so that the beacon frames sent by the first access point and the second access point implement a multipath effect. For the terminal, a beacon frame (for example, the third beacon frame) received by the terminal is a superposition of the first beacon frame and the second beacon frame. Relatively, signal strength of the third beacon frame received by the terminal is greater, so that a roaming process can be reduced.

In a scenario, access points may be time-synchronized. In this case, the first time and the second time may be preset beacon transmission time. It may be understood that preset beacon transmission time of each access point may be determined based on a beacon transmission period and a clock of the access point, and the beacon transmission period may be configured by an AC. Because the access points are time-synchronized, it may be considered that the access points have same preset beacon transmission time or approximately same preset beacon transmission time. Any access point sends a beacon frame when the preset beacon transmission time is reached. For example, the first access point sends the first beacon frame when the preset beacon transmission time is reached. The second access point sends the second beacon frame when the preset beacon transmission time is reached.

The first beacon frame carries the first BSSID and a first timestamp. Similarly, the second beacon frame carries the first BSSID and a second timestamp. The first timestamp may be system time obtained from a system clock of the first access point. The second timestamp may be system time obtained from a system clock of the second access point. When time synchronization precision between the first access point and the second access point is higher than precision required by a timestamp, the first timestamp set based on the system time of the first access point and the second timestamp set based on the system time of the second access point may be considered to be the same. Alternatively, when an error between the first timestamp and the second timestamp is very small and within a specified precision range, the first timestamp and the second timestamp may be considered to be the same. In an implementation, if an interval between sending beacon frames by the access points is less than a guard interval (guard interval, GI), it may be considered that the access points send the beacon frames at the same time. Correspondingly, the time synchronization precision between the first access point and the second access point is higher than the GI. For example, in an 802.11ax standard, the GI may be 0.8 µs (800 ns), 1.6 µs, or 3.2 µs. Assuming that the GI is 800 ns, the time synchronization precision between the first access point and the second access point may be 80 ns.

It may be understood that the GI is interval time set between data blocks to reduce transmission interference. In a wireless transmission process, a radio frame is divided into a plurality of symbol sequences (or databases). Due to multipath interference in spatial transmission of a radio signal, a beginning of a later symbol may reach a receiver earlier than an end of a preceding symbol, causing inter-symbol interference. Therefore, to reduce the interference, the GI is usually set, so that blank space is reserved between consecutive symbols as buffer time.

In this scenario, the access points need to be time-synchronized in advance, and a timestamp carried in a beacon frame sent by each access point may be system time obtained from a system clock of each access point. This procedure is simple.

In another scenario, the first access point and the second access point are secondary access points, and may send the beacon frames based on triggering of a primary access point, to implement the multipath effect. In this case, the primary access point (for example, the third access point) may send a timing synchronization frame, where the timing synchronization frame is used to trigger an access point that receives the timing synchronization frame to send a beacon frame simultaneously, for example, S900. Correspondingly, the first access point and the second access point separately receive the timing synchronization frame, and send the beacon frames.

The timing synchronization frame includes timestamp information, and the timestamp information may indicate a timestamp that needs to be filled in when the access point that receives the timing synchronization frame sends the beacon frame, so that timestamps carried in the beacon frames sent by the secondary access points are the same. Any secondary access point receives the timing synchronization frame, and sends the beacon frame at the first time. The first time may be a sum of time at which the timing synchronization frame is received and preset duration. The preset duration may be a brief reference of short interframe space (short interframe space, SIFS). The third access point may also send a beacon frame (for example, the third beacon frame) at the first time. For example, after sending the timing synchronization frame, the third access point sends the third beacon frame at an interval of the SIFS. In this case, an interval between time at which the third access point sends the timing synchronization frame and time at which the secondary access point receives the timing synchronization frame may be considered to be very small by default, and may be ignored within a tolerable deviation range. It may be understood that the access points are time-synchronized in advance, so that the timestamps carried in the beacon frames sent by the access points are the same. Therefore, S900 is not a mandatory step, and is shown by using a dashed line in FIG. 9.

In this scenario, the access points may also send a same beacon frame at the same time or close time, to implement the multipath effect, so that signal strength of a beacon frame finally obtained by the terminal is greater, thereby reducing triggering of a roaming process.

In the foregoing embodiments provided in this application, the methods provided in embodiments of this application are respectively described from a perspective of interaction between an access point and a terminal device. The steps performed by the access point may be implemented by different functional entities included in the access point. The steps performed by the terminal device may be implemented by different functional entities included in the terminal device. To implement functions in the method provided in the foregoing embodiments of this application, the terminal device and the access point may include a hardware structure and/or a software module, and the foregoing functions are implemented in a form of a hardware structure, a software module, or a combination of the hardware structure and the software module. Whether a function in the foregoing functions is performed by using the hardware structure, the software module, or the combination of the hardware structure and the software module depends on particular applications and design constraints of the technical solutions.

Based on a same inventive concept as the first communication method, an embodiment of this application further provides a first WLAN system. The first WLAN system may include N access points, where N is an integer greater than or equal to 2. The N access points operate on a same channel and use a same SSID. In addition, beacon frames sent by the N access points carry a same BSSID, and each access point sends the beacon frame by using a high modulation order. For example, the modulation order used by each access point is higher than 64-QAM. In the first WLAN system, signal strength of all beacon frames received by a terminal may be strong, to reduce triggering of a terminal roaming process.

In a scenario, there is no primary/secondary relationship between the N access points, the N access points may be time-synchronized, and each access point sends the beacon frame when preset beacon transmission time is reached. A timestamp carried in the beacon frame sent by each access point may be system time obtained from a system clock. For details, refer to the related content in the foregoing embodiment in FIG. 4. Details are not described herein again.

In another scenario, the N access points include a primary access point and N-1 secondary access points, and a timestamp carried in a beacon frame sent by the secondary access point may be a sum of a timestamp carried in a received beacon frame and a processing delay, or may be a preset timestamp. Optionally, each secondary access point may determine whether to send the beacon frame. For example, each secondary access point sends the beacon frame when a first condition is met; or each secondary access point does not send the beacon frame when the first condition is not met. For another example, each secondary access point sends the beacon frame when the first condition and a second condition are met; or the secondary access point does not send the beacon frame when neither the first condition nor the second condition is met. In this way, a quantity of access points that send beacon frames can be reduced, to reduce unnecessary beacon frames demodulated by the terminal and reduce power consumption of the terminal. For details, refer to the related content in the foregoing embodiment in FIG. 4. Details are not described herein again.

Based on a same inventive concept as the second communication method, an embodiment of this application further provides a second WLAN system. The second WLAN system may include N access points, where N is an integer greater than or equal to 2. The N access points operate on a same channel and use a same SSID. The N access points send beacon frames by using a same modulation scheme and scrambling code at the same time or close time, and the beacon frames sent by the N access points have same content, so that the beacon frames sent by the N access points implement a multipath effect, and signal strength of all beacon frames received by a terminal may be strong, to reduce triggering of a terminal roaming process.

In a scenario, there is no primary/secondary relationship between the N access points, the N access points may be time-synchronized, and each access point sends the beacon frame when preset beacon transmission time is reached. A timestamp carried in the beacon frame sent by each access point may be system time obtained from a system clock. For details, refer to the related content in the foregoing embodiment in FIG. 9. Details are not described herein again.

In another scenario, the N access points include a primary access point and N-1 secondary access points. The primary access point sends a timing synchronization frame to each secondary access point, to indicate a timestamp carried in a beacon frame sent by each secondary access point, so that timestamps carried in the beacon frames sent by the access points are the same. For details, refer to the related content in the foregoing embodiment in FIG. 9. Details are not described herein again.

Based on a same inventive concept, an embodiment of this application further provides a communication apparatus configured to implement the first communication method and the second communication method. Therefore, all the foregoing content may be used in the following embodiments. Repeated content is not described again.

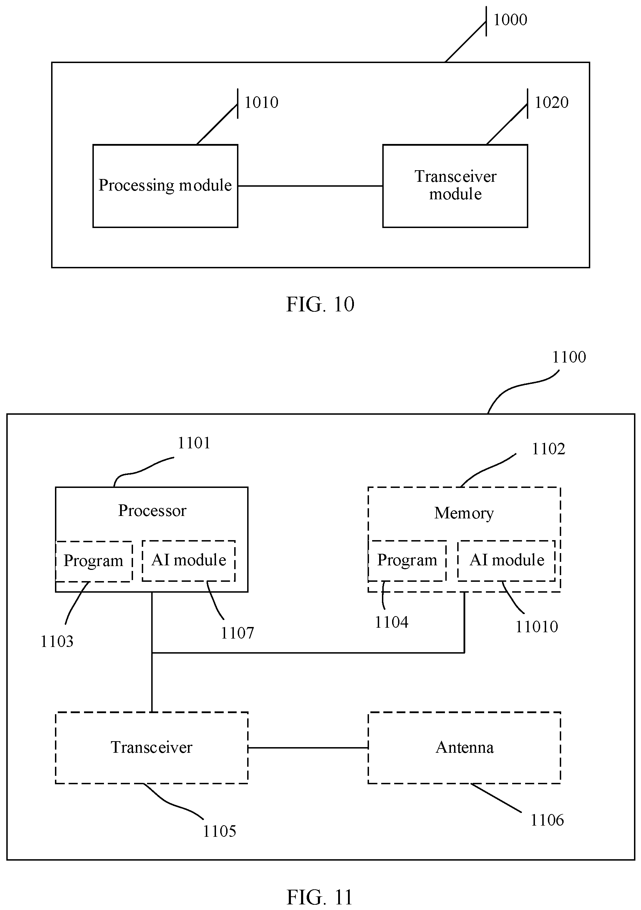

FIG. 10 is a block diagram of a communication apparatus 1000 according to an embodiment of this application. The communication apparatus 1000 may be the first access point, the second access point, the third access point, or the terminal device in the foregoing embodiments. For example, the communication apparatus 1000 may be the access point or the terminal device in FIG. 1; or the communication apparatus 1000 is a chip (system) in the access point or a chip (system) in the terminal device; or the communication apparatus 1000 is a software module of the access point or the terminal device. The communication apparatus 1000 may correspondingly implement functions or steps implemented by the terminal device, the first access point, the second access point, or the third access point in the foregoing method embodiments. The communication apparatus 1000 may include a processing module 1010 and a transceiver module 1020. Optionally, the communication apparatus may further include a storage module. The storage module may be configured to store instructions (code or a program) and/or data. The storage module may be, for example, a memory. The processing module 1010 and the transceiver module 1020 may be coupled to the storage module. For example, the processing module 1010 may read the instructions (code or program) and/or the data in the storage module, to implement a corresponding method. When the communication apparatus 1000 is the chip in the terminal device, the storage module may be a storage module in the chip, for example, a register or a cache. For example, the storage module may alternatively be a storage module that is in the access point/terminal device and that is located outside the chip, for example, a read-only memory (read-only memory, ROM), another type of static storage device that can store static information and instructions, or a random access memory (random access memory, RAM). The foregoing modules may be independently disposed, or may be partially or completely integrated.

In a possible implementation, the processing module 1010 may be a processor or a controller, for example, may be a CPU, a general-purpose processor, a DSP, an ASIC, an FPGA, or another programmable logic device, a transistor logic device, a hardware component, or any combination thereof. The processing module 1010 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1020 is a transceiver, an interface circuit, a bus, a pin, or another possible communication interface, and is configured to receive a signal from another apparatus. For example, when the apparatus is implemented in a form of a chip, the transceiver module 1020 is an interface circuit used by the chip to receive a signal from another chip or apparatus, or is an interface circuit used by the chip to send a signal to another chip or apparatus.

In some possible implementations, the communication apparatus 1000 can correspondingly implement behavior and functions of the first access point or the second access point in the foregoing method embodiments. The communication apparatus 1000 may be an access point, or may be a component (for example, a chip or a circuit) used in the access point, or may be a chip, a chip group, or a part of a chip in the access point that is configured to perform a related method function, or may be a software module that can implement a method performed by the first access point, the second access point, or the third access point in the foregoing methods (for example, the communication method 400 and the communication method 900). This is not limited.

For example, the communication apparatus 1000 is the first access point. The processing module 1010 may generate a first beacon frame by using a modulation order higher than or equal to a first modulation order, and the transceiver module 1020 may send the first beacon frame, where the first beacon frame includes a first BSSID. The communication apparatus 1000 is the second access point. The processing module 1010 may generate a second beacon frame by using a modulation order higher than or equal to a second modulation order, and the transceiver module 1020 may send the second beacon frame, where the second beacon frame includes the first BSSID. For details, refer to the foregoing embodiment of the communication method 400. Details are not described herein again.

For another example, the communication apparatus 1000 is the first access point. The processing module 1010 may determine to send a first beacon frame at first time, where the first beacon frame carries a first BSSID and a first timestamp, and the transceiver module 1020 may send the first beacon frame at the first time. The communication apparatus 1000 is the second access point. The processing module 1010 may determine to send a second beacon frame at second time, where the second beacon frame carries the first BSSID and a second timestamp, and the transceiver module 1020 may send the second beacon frame at the second time. The first time is the same as or close to the second time. The first timestamp is the same as the second timestamp. For details, refer to the foregoing embodiment of the communication method 900. Details are not described herein again.

When the communication apparatus 1000 is a chip-type apparatus or circuit, the transceiver module 1020 may be an input/output circuit and/or a communication interface, and the processing module 1010 is an integrated processor, a microprocessor, or an integrated circuit.

FIG. 11 is a block diagram of a communication apparatus 1100 according to an embodiment of this application. The communication apparatus 1100 may be the first access point, the second access point, or the terminal device in the foregoing embodiments. For example, the communication apparatus 1100 may be the access point or the terminal device in FIG. 1; or the communication apparatus 1100 is a chip (system) in the access point or the terminal device. In this embodiment of this application, the chip system may include a chip, or may include a chip and another discrete device. For a specific function, refer to the descriptions of the foregoing method embodiments.

The communication apparatus 1100 includes one or more processors 1101, configured to implement or support the communication apparatus 1100 in implementing functions of the terminal device, the first access point, the second access point, or the third access point in the method provided in embodiments of this application. For details, refer to the detailed descriptions in the method example. Details are not described herein again. The processor 1101 may also be referred to as a processing unit or a processing module, and may implement a specific control function. The processor 1101 may be a general-purpose processor, a dedicated processor, or the like. For example, the processor 401 includes a baseband processor, a central processing unit, an application processor, a modem processor, a graphics processing unit, an image signal processor, a digital signal processor, a video codec processor, a controller, a storage, and/or a neural network processor. The baseband processor may be configured to process a communication protocol and communication data. The central processing unit may be configured to control the communication apparatus 1100 (for example, an access point or a terminal apparatus), execute a software program, and/or process data. Different processors may be independent devices, or may be integrated into one or more processors, for example, integrated into one or more application specific integrated circuits.

In a design, the processor 1101 may include a program 1103 (which may also be referred to as code or instructions sometimes). The program 1103 may be run on the processor 1101, to cause the communication apparatus 1100 to perform the method described in the foregoing embodiments. In another possible design, the communication apparatus 1100 includes a circuit (not shown in FIG. 11). The circuit is configured to implement a function of the first access point, the second access point, or the terminal device in the foregoing embodiments.

In a design, the communication apparatus 1100 may include one or more memories 1102. The memory 1102 stores a program 1104 (which may also be referred to as code or instructions sometimes), and the program 1104 may be run on the processor 1101, to cause the communication apparatus 1100 to perform the method described in the foregoing method embodiments, for example, the procedure shown in FIG. 4 or FIG. 9.

In a design, the processor 1101 and/or the memory 1102 may include an artificial intelligence (artificial intelligence, AI) module 1107 and/or an AI module 11010. The AI module is configured to implement an AI-related function. The AI module may be implemented by software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 1101 and/or the memory 1102 may further store data. The processor and the memory may be separately disposed, or may be integrated together.

In a possible design, the communication apparatus 1100 may further include a transceiver 1105 and/or an antenna 1106. The processor 1101 may also be referred to as a processing unit sometimes, and controls the communication apparatus 1100. The transceiver 1105 may be referred to as a transceiver unit, a transceiver machine, a transceiver circuit, a transceiver, or the like, and is configured to implement a transceiver function of the communication apparatus by using the antenna 1106.

In a possible design, the communication apparatus 1100 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1100 may include more or fewer components, or some components are integrated, or some components are split. The components may be implemented by hardware, software, or a combination of software and hardware.

The communication apparatus in the foregoing embodiments may be an access point (or a terminal device), or may be a circuit, or may be a chip used in the access point (or the terminal device), or may be another combined device or component having functions of the foregoing access point (or the terminal device), or the like. When the communication apparatus is the access point (or the terminal device), the transceiver module may be a transceiver, and may include an antenna, a radio frequency circuit, and the like, and the processing module may be a processor, for example, a CPU. When the communication apparatus is the component having the function of the access point (or the terminal device), the transceiver module may be a radio frequency unit, and the processing module may be a processor. When the communication apparatus is a chip system, the communication apparatus may be an FPGA, a dedicated ASIC, a system on a chip (system on a chip, SoC), a CPU, a network processor (network processor, NP), a DSP, a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the storage, and may be directly read from the storage, or may be read from the storage through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

An embodiment of this application further provides a computer-readable storage medium, including instructions. When the instructions are run on a computer, the computer is caused to perform the method performed by the terminal device, the first access point, the second access point, or the third access point in FIG. 4 or FIG. 9.

An embodiment of this application further provides a computer program product, including instructions. When the instructions are run on a computer, the computer is caused to perform the method performed by the terminal device, the first access point, the second access point, or the third access point in FIG. 4 or FIG. 9.

An embodiment of this application provides a chip system. The chip system includes a processor, may further include a memory, and is configured to implement a function of the terminal device, the first access point, or the second access point in the foregoing method. The chip system may include a chip, or may include a chip and another discrete device.

To implement functions of the communication apparatuses in FIG. 10 and FIG. 11, an embodiment of this application further provides a chip, including a processor, configured to support the communication apparatus in implementing the function of the terminal device, the first access point, or the second access point in the foregoing method embodiments. In a possible design, the chip is connected to a memory, or the chip includes the memory. The memory is configured to store a computer program or instructions and data that are necessary for the communication apparatus.

In embodiments of this application, "when", "in a case of", and "if" all mean that an apparatus performs corresponding processing in an objective case, are not intended to limit time, do not require the apparatus to necessarily have a determining action during implementation, and do not mean another limitation. Unless otherwise specified, "if" and "in a case of" may be interchangeable, and "when" and "in a case in which" may be interchangeable. "When" and "if"/"in a case of" are interchangeable.

Unless otherwise specified, a quantity of nouns, unless otherwise specified, means "singular nouns or plural nouns", that is, "one or more". "A plurality of" means two or more. In view of this, "a plurality of" may also be understood as "at least two" in embodiments of this application. "At least one" may be one or more, for example, at least one is one, two, or more. For example, including at least one means that one, two, or more are included, and which one or ones are included is not limited. For example, if at least one of A, B, and C is included, A, B, C, A and B, A and C, B and C, or A, B, and C may be included. Similarly, understandings of descriptions such as "at least one" are also similar. The expression "at least one of the following items (pieces)" or a similar expression means any combination of these items, including a single item (piece) or any combination of a plurality of items (pieces). For example, "at least one of A, B, and C" includes A, B, C, A and B, A and C, B and C, or A, B, and C. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" mentioned in embodiments of this application are used to distinguish a plurality of objects, and are not used to limit a sequence, a time sequence, priorities, or importance degrees of the plurality of objects. In addition, descriptions of "first" and "second" do not mean that objects are necessarily different. For example, the first access point and the second access point indicate that there are two access points, and priorities, importance, or the like of the two access points are not limited.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, illustrative logical blocks (illustrative logical blocks) and steps (steps) described with reference to embodiments disclosed in this specification may be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a portable hard drive, a read-only memory (read-only memory, ROM), a RAM, a magnetic disk, or an optical disc.

It is clear that a person skilled in the art can make various modifications and variations to this application without departing from the scope of this application. This application is intended to cover these modifications and variations of this application provided that these modifications and variations fall within the scope of protection defined by the following claims in this application and equivalent technologies thereof.

## Claims

1. A wireless local area network WLAN system, comprising a plurality of access points, wherein the plurality of access points comprise a first access point and a second access point, wherein
the first access point is configured to send a first beacon frame, wherein the first beacon frame comprises a first service set identifier BSSID; and
the second access point is configured to send a second beacon frame, wherein the second beacon frame comprises the first BSSID, wherein
the first beacon frame is modulated by using a first modulation order, the second beacon frame is modulated by using a second modulation order, and both the first modulation order and the second modulation order are higher than or equal to a modulation order threshold.

2. The WLAN system according to claim 1, wherein the modulation order threshold is determined based on a signal strength threshold.

3. The WLAN system according to claim 2, wherein the modulation order threshold is higher than or equal to a modulation order corresponding to the signal strength threshold, and the modulation order corresponding to the signal strength threshold is: when the corresponding modulation order is used to modulate a signal, if signal strength of a signal received by a receiving end is greater than or equal to the signal strength threshold, the receiving end may demodulate the received signal.

4. The WLAN system according to claim 2 or 3, wherein the signal strength threshold is determined based on signal strength corresponding to terminal-triggered roaming.

5. The WLAN system according to any one of claims 1 to 4, wherein both the first modulation order and the second modulation order are higher than or equal to 64-quadrature amplitude modulation QAM.

6. The WLAN system according to any one of claims 1 to 5, wherein that the second access point is configured to send the second beacon frame comprises:
when first duration is greater than preset duration, the second access point sends the second beacon frame, wherein
the first duration is a time interval between a first moment and a second moment, the first moment is a moment at which the second access point latest receives a beacon frame carrying the first BSSID, and the second moment is a moment at which the second access point last sends a beacon frame carrying the first BSSID, or the second moment is a moment at which the second access point last receives a trigger for causing the second access point to send a beacon frame carrying the first BSSID.

7. The WLAN system according to claim 6, wherein signal strength of the latest received beacon frame carrying the first BSSID is less than a preset threshold.

8. The WLAN system according to claim 6 or 7, wherein the preset duration is less than a beacon transmission period, and the preset duration is greater than total duration in which at least one access point in the WLAN system occupies a channel to send a beacon frame.

9. The WLAN system according to any one of claims 1 to 8, wherein there is a first offset between time at which the first access point sends the first beacon frame and time at which the second access point sends the second beacon frame.

10. A wireless local area network WLAN system, comprising:
a first access point, configured to send a first beacon frame at first time, wherein the first beacon frame comprises a first service set identifier BSSID;
a second access point, configured to send a second beacon frame at second time, wherein the second beacon frame comprises the first BSSID; and
a terminal device, configured to receive a third beacon frame, wherein the third beacon frame is obtained based on the first beacon frame and the second beacon frame, wherein
the first time is the same as the second time, or a time interval between the first time and the second time is less than a preset interval.

11. The WLAN system according to claim 10, wherein that the third beacon frame is obtained based on the first beacon frame and the second beacon frame comprises:
a signal carrying the third beacon frame is a superposition of a signal carrying the first beacon frame and a signal carrying the second beacon frame.

12. The WLAN system according to claim 10 or 11, wherein comprised content, a used scrambling code, and a used modulation and coding scheme MCS of the second beacon frame are the same as those of the first beacon frame.

13. The WLAN system according to any one of claims 10 to 12, wherein the first access point is further configured to:
receive a timing synchronization frame from a third access point, wherein the timing synchronization frame is used to trigger the first access point to send the first beacon frame.

14. The WLAN system according to claim 13, wherein the timing synchronization frame comprises a timestamp, and the timestamp indicates the access point that receives the timing synchronization frame to add the timestamp to a to-be-sent beacon frame.

15. The WLAN system according to claim 10, wherein both the first time and the second time are preset beacon transmission time, and different access points have same preset beacon transmission time.

16. The WLAN system according to claim 10, wherein the preset interval is less than or equal to a guard interval GI, and time synchronization precision between the first access point and the second access point is higher than the GI.

17. A communication method, comprising:
generating, by an access point, a first beacon frame, wherein the first beacon frame comprises a first service set identifier BSSID, the first beacon frame is modulated by using a first modulation order, and the first modulation order is higher than or equal to a modulation order threshold; and
sending, by the access point, the first beacon frame.

18. The method according to claim 17, wherein the modulation order threshold is determined based on a signal strength threshold.

19. The method according to claim 18, wherein the modulation order threshold is higher than or equal to a modulation order corresponding to the signal strength threshold, and the modulation order corresponding to the signal strength threshold is: when the corresponding modulation order is used to modulate a signal, if signal strength of a signal received by a receiving end is greater than or equal to the signal strength threshold, the receiving end may demodulate the received signal.

20. The method according to any one of claims 17 to 19, wherein sending, by the access point, the first beacon frame comprises:
when first duration is greater than preset duration, sending, by the access point, the first beacon frame, wherein
the first duration is a time interval between a first moment and a second moment, the first moment is a moment at which the access point latest receives a beacon frame carrying the first BSSID, and the second moment is a moment at which the access point last sends a beacon frame carrying the first BSSID, or the second moment is a moment at which the access point last receives a trigger for causing the access point to send a beacon frame carrying the first BSSID.

21. The method according to claim 20, wherein signal strength of the latest received beacon frame carrying the first BSSID is less than a preset threshold.

22. The method according to claim 20 or 21, wherein the preset duration is less than a beacon transmission period, and the preset duration is greater than total duration in which at least one access point in a WLAN system occupies a channel to send a beacon frame.

23. A communication method, comprising:
receiving, by a terminal, a third beacon frame, wherein the third beacon frame is obtained based on a first beacon frame and a second beacon frame, the first beacon frame comprises a first service set identifier BSSID, and the second beacon frame comprises the first BSSID.

24. The method according to claim 23, wherein that the third beacon frame is obtained based on the first beacon frame and the second beacon frame comprises:
a signal carrying the third beacon frame is a superposition of a signal carrying the first beacon frame and a signal carrying the second beacon frame.

25. The method according to claim 23 or 24, wherein comprised content, a used scrambling code, and a used modulation and coding scheme MCS of the second beacon frame are the same as those of the first beacon frame.

26. The method according to any one of claims 23 to 25, wherein sending of the first beacon frame is triggered by a timing synchronization frame, and sending of the second beacon frame is triggered by a timing synchronization frame.

27. The method according to claim 26, wherein the timing synchronization frame comprises a timestamp, and the timestamp indicates an access point that receives the timing synchronization frame to add the timestamp to a to-be-sent beacon frame.

28. The method according to claim 23, wherein transmission time of the first beacon frame is first time, transmission time of the second beacon frame is second time, and the first time is the same as the second time, or an interval between the first time and the second time is less than a preset interval.

29. The method according to claim 28, wherein the preset interval is less than or equal to a guard interval GI, and time synchronization precision between a first access point that sends the first beacon frame and a second access point that sends the second beacon frame is higher than the GI.

30. A communication method, comprising:
receiving, by an access point, a timing synchronization frame; and
sending, by the access point, a first beacon frame in response to receiving the timing synchronization frame, wherein the first beacon frame comprises a first service set identifier BSSID.

31. The method according to claim 30, wherein the timing synchronization frame comprises a timestamp, and the timestamp indicates the access point that receives the timing synchronization frame to add the timestamp to a to-be-sent beacon frame.

32. A communication apparatus, wherein the communication apparatus comprises a processing unit and a transceiver unit, and the processing unit is coupled to the transceiver unit, to perform the method according to any one of claims 17 to 22, or perform the method according to any one of claims 23 to 29, or perform the method according to either of claims 30 and 31.

33. A communication apparatus, wherein the communication apparatus comprises a processor and a memory, the memory is configured to store a computer program, and the processor is configured to execute the computer program stored in the memory, to cause the communication apparatus to perform the method according to any one of claims 17 to 22, or cause the communication apparatus to perform the method according to any one of claims 23 to 29, or cause the communication apparatus to perform the method according to either of claims 30 and 31.

34. A computer-readable storage medium, wherein the computer-readable storage medium is configured to store a computer program, and when the computer program is run on a computer, the computer is caused to perform the method according to any one of claims 17 to 22, or the computer is caused to perform the method according to any one of claims 23 to 29, or the computer is caused to perform the method according to either of claims 30 and 31.
